# EUROPEAN PATENT APPLICATION

(11) **EP 4 848 773 A1**
(43) Date of publication of application: **02.12.2026**
(21) Application number: 25751432.3
(22) Date of filing: 27.01.2025
(51) Int. Cl.: H04W 12/06

(54) **COMMUNICATION METHOD AND COMMUNICATION APPARATUS**

(30) Priority: 08.02.2024 CN 202410179989; 26.02.2024 CN 202410210954
(71) Applicant: Huawei Technologies Co., Ltd., Shenzhen, Guangdong 518129 (CN)
(72) Inventor: YUAN, Jiaxi, Shenzhen, Guangdong 518129 (CN); LI, He, Shenzhen, Guangdong 518129 (CN); XU, Yishan, Shenzhen, Guangdong 518129 (CN); ZHOU, Runze, Shenzhen, Guangdong 518129 (CN)
(74) Representative: Isarpatent
(86) International application number: PCT/CN2025/075431
(87) International publication number: WO 2025/167832

(57) **Abstract**

This application provides a communication method and a communication apparatus. The method includes: User equipment sends, to a first network element, a first message that carries a first user identifier of a first user using the user equipment, where the first user identifier is under security protection; after receiving the first message, the first network element initiates an authentication procedure for the first user, and sends, to the user equipment, a second message that indicates an authentication result for the first user; and the user equipment feeds back the authentication result for the first user to the first user. In the method, the first user is authenticated, so that a network side and the user equipment confirm authenticity and legitimacy of the first user, thereby providing services for the first user, and ensuring network session security.

## Description

This application claims priorities to Chinese Patent Application No. 202410179989.0, filed with the China National Intellectual Property Administration on February 8, 2024 and entitled "COMMUNICATION METHOD AND COMMUNICATION APPARATUS", and to Chinese Patent Application No. 202410210954.9, filed with the China National Intellectual Property Administration on February 26, 2024 and entitled "COMMUNICATION METHOD AND COMMUNICATION APPARATUS", both of which are incorporated herein by reference in their entireties.

### TECHNICAL FIELD

This application relates to the communication field, and more specifically, to a communication method and a communication apparatus.

### BACKGROUND

In communication systems such as a 5th generation (5th generation, 5G) system, to ensure network security, a primary authentication (primary authentication) procedure needs to be performed on a terminal device that accesses a network, to be specific, authentication and authorization need to be performed on the terminal device. The terminal device can access the network only after authentication succeeds, and can further request to establish a protocol data unit (protocol data unit, PDU) session to access various services in a data network (data network, DN). However, there may be unauthorized users in current network communication, and consequently, security cannot be ensured. Therefore, additional measures are urgently required to reduce potential security risks.

### SUMMARY

This application provides a communication method and a communication apparatus, to ensure network security.

According to a first aspect, a communication method is provided. The method may be performed by a first network element, or may be performed by a chip or a circuit of a first network element. This is not limited in this application. For ease of description, the following provides descriptions by using an example in which the method is performed by the first network element.

The method includes: A first network element receives a first message from user equipment, where the first message includes a security-protected first user identifier of a first user using the user equipment; the first network element initiates an authentication procedure for the first user based on the first message; and the first network element sends a second message to the user equipment, where the second message indicates an authentication result for the first user.

The first user using the user equipment may be understood as a user logging in to the user equipment, or a user logging in to an external device that establishes a communication connection with the user equipment.

It should be understood that the first user identifier is under security protection, for example, integrity security protection and/or confidentiality security protection.

Optionally, the first message may be under security protection. In other words, a manner of security protection on the first user identifier is not limited in this application, for example, may be security protection specifically for the first user identifier, or may be security protection for the first message carrying the first user identifier.

Optionally, the second message may be under security protection like the first message. Details are not described again.

Based on the foregoing solution, after receiving the first message carrying the first user identifier under security protection, the first network element may trigger the authentication procedure for the first user, and send the second message to the user equipment, so that the user equipment can determine the authentication result for the first user based on the second message. A network side authenticates the first user and indicates the authentication result for the first user to the user equipment, so that the first network element and the user equipment can determine legitimacy and authenticity of the first user. In this way, the first user can obtain a service when the first user is successfully authenticated, thereby ensuring security of a network session and reducing potential security risks.

In some implementations, before the first network element receives the first message from the user equipment, the method further includes: The first network element receives a registration request message from the user equipment, where the registration request message includes an identifier of the user equipment; the first network element determines, based on the registration request message, to initiate a primary authentication procedure for the user equipment; the first network element sends a non-access stratum security mode command (non-access stratum security mode command, NAS SMC) message to the user equipment after a primary authentication procedure for the user equipment, where the NAS SMC message is used to activate a NAS security context; and the first network element receives a non-access stratum security mode command complete (non-access stratum security mode command complete, NAS SMP) message from the user equipment.

Based on the foregoing solution, the network side may complete registration of the user equipment based on the registration request message of the user equipment, and trigger a NAS SMC procedure to activate the NAS security context. In other words, the network side can ensure authenticity and legitimacy of the user equipment, and subsequent information exchange between the user equipment and the network side is under security protection. In other words, security protection may be performed, by using the NAS security context, on the first message sent by the user equipment to the first network element to trigger authentication on the first user. This can prevent another attacker from maliciously tampering with a parameter, for example, the first user identifier, carried in the first message, thereby reducing potential security risks. In addition, the network side may initiate the authentication procedure for the first user after primary authentication on the user equipment succeeds, thereby ensuring legitimacy and authenticity of the user equipment and the first user using the user equipment, ensuring network session security, and improving user experience.

It should be noted that, in this implementation, the network side authenticates the first user based on successful authentication on the user equipment, and the authentication result for the first user is independent of an authentication result for the user equipment. In other words, the authentication result for the first user does not affect the authentication result for the user equipment. Even if the first user cannot access a network through the user equipment because the first user fails to be authenticated, another user is not affected in accessing the network through the user equipment (that is, a failure in authenticating the first user does not change a result of previous successful authentication on the user equipment).

In some implementations, the first message is a NAS SMP message. Before the first network element receives the first message from the user equipment, the method further includes: The first network element receives a registration request message from the user equipment, where the registration request message includes an identifier of the user equipment; the first network element determines, based on the registration request message, to initiate a primary authentication procedure for the user equipment; and the first network element sends a NAS SMC message to the user equipment after the primary authentication procedure for the user equipment, where the NAS SMC message is used to activate a NAS security context.

Based on the foregoing solution, the network side completes registration of the user equipment based on the registration request message of the user equipment, and trigger a NAS SMC procedure to activate the NAS security context. In other words, the network side can ensure authenticity and legitimacy of the user equipment, and subsequent information exchange between the user equipment and the network side is under security protection. In other words, the first user identifier is carried in the NAS SMP message under security protection. This can prevent another attacker from maliciously tampering with the first user identifier, thereby reducing potential security risks, and reducing signaling overheads. In addition, the network side may initiate the authentication procedure for the first user after primary authentication on the user equipment succeeds, thereby ensuring legitimacy and authenticity of the user equipment and the first user using the user equipment, ensuring network session security, and improving user experience.

In some implementations, before the first network element receives the first message from the user equipment, the method further includes: The first network element receives a registration request message from the user equipment, where the registration request message includes the identifier of the user equipment and a second user identifier of a second user; the first network element determines, based on the registration request message, to initiate a primary authentication procedure for the user equipment; and the first network element initiates an authentication procedure for the second user after primary authentication on the user equipment succeeds.

Based on the foregoing solution, when the second user is a 1^{st} user of the user equipment, the second user triggers the user equipment to register with the network. In this case, the registration request message sent by the user equipment carries both the identifier of the user equipment and the second user identifier of the second user. The network side completes registration of the user equipment based on the registration request message of the user equipment, and triggers a NAS SMC procedure in a registration process to activate a NAS security context, thereby completing primary authentication on the user equipment. An authentication procedure for the second user is initiated after primary authentication on the user equipment succeeds. Subsequently, when another user (for example, the first user) expects to access the network through the user equipment, the first message sent by the user equipment to the first network element may be under security protection, thereby ensuring security when another user subsequently accesses the network through the user equipment.

In some implementations, that the first network element initiates the authentication procedure for the first user based on the first message includes: The first network element initiates authentication on the first user based on first indication information associated with the first message, where the first indication information is represented by one or more of a name of the first message, the first user identifier, or a specified information element carried in the first message.

Based on the foregoing solution, the first network element may determine and initiate authentication on the first user based on the first indication information. For example, the name of the first message may be a user authentication request message, and the specified information element may be a registration type (indicating that the first message may be a registration request message for the first user), a specific field in the first message (used to identify the first user using the user equipment), or the like.

In some implementations, initiating the authentication procedure for the first user includes: The first network element determines a first authentication function; the first network element sends a user authentication request message to the first authentication function, where the user authentication request message includes the first user identifier, and the user authentication request message may be used to request to authenticate the first user; and the first network element receives a user authentication response message from the first authentication function, where the user authentication response message indicates the authentication result for the first user.

In some implementations, that the first network element determines the first authentication function includes: The first network element determines the first authentication function based on local configuration information; and/or the first network element determines the first authentication function based on the first user identifier.

It should be understood that the first authentication function supports authentication of the first user corresponding to the first user identifier.

Optionally, an authentication function for authenticating the user may be the same as an authentication function for performing primary authentication on the user equipment. In some implementations, that the first network element determines the first authentication function includes: obtaining the first authentication function for performing primary authentication on the user equipment.

In some implementations, the user authentication request message further includes second indication information, and the second indication information indicates that to authenticate the first user.

Based on the foregoing solution, the second indication information is carried in the user authentication request message, so that the first authentication function determines, based on the second indication information, to authenticate the first user, and learns of authenticity and legitimacy of the first user when determining that the first user is successfully authenticated, thereby providing a network service for the first user, and ensuring user experience.

In some implementations, the user authentication response message includes the authentication result for the first user and/or first user authentication result indication information, the first user authentication result indication information indicates the authentication result for the first user, and the authentication result for the first user indicates that the first user is successfully authenticated or fails to be authenticated.

Based on the foregoing solution, the user authentication response message carries the authentication result for the first user and/or the first user authentication result indication information, so that the first network element can determine the authentication result for the first user, and learns of authenticity and legitimacy of the first user, thereby providing a network service for the first user when the first user is successfully authenticated, and ensuring user experience.

In some implementations, the second message includes the authentication result for the first user and/or second user authentication result indication information, the second user authentication result indication information indicates the authentication result for the first user, and the authentication result for the first user indicates that the first user is successfully authenticated or fails to be authenticated.

Based on the foregoing solution, the first network element may directly or indirectly notify the user equipment of the authentication result for the first user by using the second message, so that the user equipment learns of authenticity and legitimacy of the first user, and can perform a subsequent operation based on the authentication result for the first user, for example, provide a service for the first user when the first user is successfully authenticated, or refuse to provide a service for the first user when the first user fails to be authenticated.

In some implementations, the method further includes: When the authentication result for the first user indicates that the first user is successfully authenticated, the first network element stores an association relationship between the first user identifier and at least one of the authentication result for the first user, the identifier of the user equipment, and authentication success time.

Based on the foregoing solution, when the authentication result for the first user indicates that the first user is successfully authenticated, the first network element may associate and store together, with the first user identifier, the at least one of the authentication result for the first user, the authentication success time, and the identifier of the user equipment, so that the first network element subsequently receives the first message from the user equipment. The first network element may determine, based on the locally stored authentication result for the first user (for example, the first user is successfully authenticated) associated with the first user identifier, not to initiate the authentication procedure for the first user, thereby providing a service for the first user, and improving user service experience while reducing signaling overheads.

In some implementations, the first user identifier includes a first information part and a second information part, the first information part identifies the first user, the second information part is used to determine routing information of a first storage function, the first storage function is used to store a credential of the first user, and the credential is used for identification and authentication of the first user.

In some implementations, when the first network element is a mobility management network element, the first message is a first NAS message, and the second message is a second NAS message; or when the first network element is a session management network element, the first message is a first session management (session management, SM) message, and the second message is a second SM message.

In some implementations, the first NAS message is a registration request message, or the first NAS message is a user authentication request message, or the first NAS message is a NAS SMP message.

In some implementations, when the first NAS message is a registration request message, the method further includes: The first network element sends a registration complete message to the user equipment after the authentication procedure for the first user; or the first network element sends a registration complete message to the user equipment before the authentication procedure for the first user.

In other words, a sequence of the registration procedure and the user authentication procedure is not limited in this application. To be specific, the first network element may send the registration complete message to the user equipment before the user authentication procedure or after the user authentication procedure.

In some implementations, the first SM message is a protocol data unit (protocol data unit, PDU) session establishment request message, or the first SM message is a user authentication request message, or the first SM message is an extensible authentication protocol response (extensible authentication protocol response, EAP-Response) message.

According to a second aspect, a communication method is provided. The method may be performed by user equipment, or may be performed by a chip or a circuit of user equipment. This is not limited in this application. For ease of description, the following uses an example in which the user equipment performs the method for description.

The method includes: The user equipment sends a first message to a first network element, where the first message includes a security-protected first user identifier of a first user using the user equipment; the user equipment receives a second message from the first network element, where the second message indicates an authentication result for the first user; and the user equipment sends the authentication result for the first user to the first user.

Optionally, the first message and/or the second message may be under security protection, for example, integrity security protection and/or confidentiality security protection.

Based on the foregoing solution, the user equipment sends, to the first network element, the first message that carries the first user identifier under security protection, so that the first network element can trigger an authentication procedure for the first user based on the first message. Further, the user equipment can receive the second message from the first network element, so that the user equipment can determine the authentication result for the first user based on the second message, and notify the first user of the authentication result for the first user. A network side is requested to authenticate the first user, and the authentication result for the first user is obtained from the first network element, so that the first network element and the user equipment can determine legitimacy and authenticity of the first user. In this way, the first user can obtain a service when the first user is successfully authenticated, thereby ensuring security of a network session and reducing potential security risks.

In some implementations, the method further includes: When the authentication result for the first user indicates that the first user is successfully authenticated, the user equipment stores an association relationship between the first user identifier and at least one of the authentication result for the first user and authentication success time.

Based on the foregoing solution, when the authentication result for the first user indicates that the first user is successfully authenticated, the user equipment may associate and store together, with the first user identifier, at least one of the authentication result for the first user and the authentication success time, so that when the user equipment subsequently determines that the first user logs in, the user equipment may determine, based on the locally stored authentication result for the first user (for example, the first user is successfully authenticated) associated with the first user identifier, not to send the first message to the first network element, to request to authenticate the first user, thereby providing a service for the first user, and improving user service experience while reducing signaling overheads.

In some implementations, before the user equipment sends the first message to the first network element, the method further includes: When the first user logs in to the user equipment and/or an external device by using the first user identifier, the user equipment determines that the authentication result for the first user is not locally stored, where the external device is in a communication connection with the user equipment.

Based on the foregoing solution, when determining that the first user logs in, the user equipment may send the first message to the first network element based on the locally stored authentication result for the first user, to request to authenticate the first user, thereby providing a service for the first user, and improving user service experience while reducing signaling overheads.

In some implementations, the user equipment sends the first message to the first network element includes: The user equipment sends the first message under security protection to the first network element when the first user logs in to the user equipment and/or an external device by using the first user identifier.

In some implementations, before the user equipment sends the first message under security protection to the first network element, the method further includes: The user equipment sends a registration request message to the first network element, where the registration request message includes an identifier of the user equipment; the user equipment receives a NAS SMC message from the first network element after a primary authentication procedure for the user equipment, where the NAS SMC message is used to activate a NAS security context; and the user equipment sends a NAS SMP message to the first network element.

In some implementations, the first message is a NAS SMP message. Before the user equipment sends the first message under security protection to the first network element, the method further includes: The user equipment sends a registration request message to the first network element, where the registration request message includes an identifier of the user equipment; and the user equipment receives a NAS SMC message from the first network element after a primary authentication procedure for the user equipment, where the NAS SMC message is used to activate a NAS security context.

In some implementations, before the user equipment sends the first message to the first network element, the method further includes: The user equipment sends a registration request message to the first network element, where the registration request message includes an identifier of the user equipment and a second user identifier of a second user.

In some implementations, the first user identifier includes a first information part and a second information part, the first information part identifies the first user, the second information part is used to determine routing information of a first storage function, the first storage function is used to store a credential of the first user, and the credential is used for identification and authentication of the first user.

In some implementations, before the user equipment sends the first message under security protection to the first network element, the method further includes: The user equipment obtains the first user identifier, which specifically includes: The user equipment receives the first user identifier from the external device; and/or the user equipment obtains the first user identifier based on logging in to the user equipment by the first user by using the first user identifier.

In some implementations, the second message includes the authentication result for the first user and/or second user authentication result indication information, the second user authentication result indication information indicates the authentication result for the first user, and the authentication result for the first user indicates that the first user is successfully authenticated or fails to be authenticated.

In some implementations, that the user equipment sends the authentication result for the first user to the first user includes: The user equipment sends third user authentication result indication information to the first user, where the third user authentication result indication information indicates the authentication result for the first user, and the authentication result for the first user indicates that the first user is successfully authenticated or fails to be authenticated.

In some implementations, the method further includes: When the authentication result for the first user indicates that the first user is successfully authenticated, the user equipment provides a service for the first user; or when the authentication result for the first user indicates that the first user fails to be authenticated, the user equipment rejects providing a service for the first user.

In some implementations, when the first network element is a mobility management network element, the first message is a first NAS message, and the second message is a second NAS message; or when the first network element is a session management network element, the first message is a first SM message, and the second message is a second SM message.

In some implementations, the first NAS message is a registration request message, or the first NAS message is a user authentication request message, or the first NAS message is a NAS SMP message.

In some implementations, the first SM message is a PDU session establishment request message, or the first SM message is a user authentication request message, or the first SM message is an extensible authentication protocol response EAP-Response message.

For beneficial effects of the second aspect and some implementations of the second aspect, refer to the descriptions of the first aspect and some implementations of the first aspect. Details are not described herein again.

According to a third aspect, a communication method is provided. The method may be performed by a first network element, or may be performed by a chip or a circuit of a first network element. This is not limited in this application. For ease of description, the following provides descriptions by using an example in which the method is performed by the first network element.

The method includes: receiving a first message from user equipment, where the first message includes a user identifier, and the first message is used to trigger a network to authenticate the user identifier; determining to authenticate the user identifier, and obtaining a user authentication result; and sending a second message to the user equipment, where the second message is used to indicate the user authentication result.

In some implementations, determining to authenticate the user identifier includes: determining, based on a name of the first message, to authenticate the user identifier.

In some implementations, determining to authenticate the user identifier includes: determining, based on the user identifier carried in the first message, to authenticate the user identifier.

In some implementations, determining to authenticate the user identifier includes: determining, based on a registration type carried in the first message, to authenticate the user identifier.

In some implementations, determining to authenticate the user identifier includes: determining, based on local configuration information, to authenticate the user identifier.

In some implementations, the user identifier is under integrity security protection and/or confidentiality security protection.

In some implementations, the method further includes: storing an association relationship between the user authentication result and the user identifier.

In some implementations, the first message is a non-access stratum NAS message or a session management SM message.

For beneficial effects of the third aspect and some implementations of the third aspect, refer to the descriptions of the first aspect and some implementations of the first aspect. Details are not described herein again.

According to a fourth aspect, a communication method is provided. The method may be performed by user equipment, or may be performed by a chip or a circuit of user equipment. This is not limited in this application. For ease of description, the following uses an example in which the user equipment performs the method for description.

The method includes: sending a first message to a first network element, where the first message includes a user identifier, and the first message is used to trigger a network to authenticate the user identifier; and receiving a second message from the first network element, where the second message indicates a user authentication result.

In some implementations, sending the first message to the first network element includes: sending the first message to the first network element when determining that a user logs in to user equipment by using the user identifier.

In some implementations, determining that the user logs in to the user equipment by using the user identifier includes: determining that the user logs in to an external device by using the user identifier, where the external device establishes a connection with the user equipment.

In some implementations, the user identifier is under integrity security protection and/or confidentiality security protection.

In some implementations, the method further includes: storing an association relationship between the user authentication result and the user identifier.

In some implementations, the first message is a non-access stratum NAS message or a session management SM message.

For beneficial effects of the fourth aspect and some implementations of the fourth aspect, refer to the descriptions of the third aspect and some implementations of the third aspect. Details are not described herein again.

According to a fifth aspect, a communication apparatus is provided, and may include one-to-one corresponding modules or units to perform the methods/operations/steps/actions described in the first aspect. The module or the unit may be a hardware circuit, may be software, or may be implemented by a hardware circuit in combination with software.

A transceiver unit is configured to receive a first message from user equipment, where the first message includes a first user identifier of a first user using the user equipment. A processing unit is configured to initiate an authentication procedure for the first user based on the first message. The transceiver unit is further configured to send a second message under security protection to the user equipment, where the second message indicates an authentication result for the first user.

The transceiver unit may perform receiving and sending processing in the first aspect and the possible implementations of the first aspect. Optionally, the apparatus further includes a processing unit. The processing unit may perform processing other than receiving and sending processing in the first aspect and the possible implementations of the first aspect.

According to a sixth aspect, a communication apparatus is provided, and may include one-to-one corresponding modules or units to perform the methods/operations/steps/actions described in the second aspect. The module or the unit may be a hardware circuit, may be software, or may be implemented by a hardware circuit in combination with software.

For example, a transceiver unit is configured to send a first message under security protection to a first network element, where the first message includes a first user identifier of a first user using user equipment. The transceiver unit is further configured to receive a second message under security protection from the first network element, where the second message indicates an authentication result for the first user. The transceiver unit is further configured to send, by the user equipment, the authentication result for the first user to the first user.

The transceiver unit may perform receiving and sending processing in the second aspect and the possible implementations of the second aspect. Optionally, the apparatus further includes a processing unit, and the processing unit may perform processing other than the receiving and sending processing in the second aspect and the possible implementations of the second aspect.

According to a seventh aspect, a communication apparatus is provided, and may include one-to-one corresponding modules or units to perform the methods/operations/steps/actions described in the third aspect. The module or the unit may be a hardware circuit, may be software, or may be implemented by a hardware circuit in combination with software.

A transceiver unit is configured to receive a first message from user equipment, where the first message includes a user identifier, and the first message is used to trigger a network to authenticate the user identifier. A processing unit is configured to: determine to authenticate the user identifier, and obtain a user authentication result. The transceiver unit is configured to send a second message to the user equipment, where the second message indicates a user authentication result.

The transceiver unit may perform receiving and sending processing in the third aspect and the possible implementations of the third aspect. Optionally, the apparatus further includes a processing unit, and the processing unit may perform processing other than the receiving and sending processing in the third aspect and the possible implementations of the third aspect.

According to an eighth aspect, a communication apparatus is provided, and may include one-to-one corresponding modules or units to perform the methods/operations/steps/actions described in the fourth aspect. The module or the unit may be a hardware circuit, may be software, or may be implemented by a hardware circuit in combination with software.

For example, a transceiver unit is configured to send a first message to a first network element, where the first message includes a user identifier, and the first message is used to trigger a network to authenticate the user identifier. The transceiver unit is configured to receive a second message from the first network element, where the second message indicates a user authentication result.

The transceiver unit may perform receiving and sending processing in the fourth aspect and the possible implementations of the fourth aspect. Optionally, the apparatus further includes a processing unit, and the processing unit may perform processing other than the receiving and sending processing in the fourth aspect and the possible implementations of the fourth aspect.

According to a ninth aspect, a communication system is provided, including a first network element and user equipment. The first network element is configured to perform the method according to any one of the first aspect or the third aspect and the possible implementations of the first aspect or the third aspect, and the user equipment is configured to perform the method according to any one of the second aspect or the fourth aspect and the possible implementations of the second aspect or the fourth aspect.

Optionally, the communication system further includes a first authentication function, a second storage function, or an external device.

According to a tenth aspect, a computer-readable storage medium is provided. The computer-readable storage medium stores a computer program or code. When the computer program or the code is run on a computer, the computer is caused to perform the method in any one of the first aspect to the fourth aspect and the possible implementations of the first aspect to the fourth aspect.

According to an eleventh aspect, a chip or a chip system is provided, including at least one processor. The at least one processor is coupled to a memory. The memory is configured to store a computer program. The processor is configured to invoke the computer program from the memory and run the computer program, to cause an apparatus in which the chip system is mounted to perform the method according to any one of the first aspect to the fourth aspect and the possible implementations of the first aspect to the fourth aspect.

The chip may include an input circuit or interface configured to send information or data and an output circuit or interface configured to receive information or data.

According to a twelfth aspect, a computer program product is provided. The computer program product includes computer program code. When the computer program code is run on a computer, the computer is caused to perform the method according to any one of the first aspect to the fourth aspect and the possible implementations of the first aspect to the fourth aspect.

According to a thirteenth aspect, a computer program is provided. When the computer program runs, the method according to any possible implementation of the first aspect to the fourth aspect is implemented.

It should be understood that, for beneficial effects of the fifth aspect to the thirteenth aspect, refer to any one of the first aspect to the fourth aspect and the possible implementations of the first aspect to the fourth aspect. Details are not described herein again.

### BRIEF DESCRIPTION OF DRAWINGS

FIG. 1 is a diagram of a network architecture;
FIG. 2 is a diagram of registration of user equipment (user equipment, UE) with a network;
FIG. 3 is a diagram in which a unified data management (unified data management, UDM) function initiates a home network-triggered primary authentication procedure;
FIG. 4 is a schematic flowchart of a communication method according to an embodiment of this application;
FIG. 5A and FIG. 5B are a schematic flowchart of another communication method according to an embodiment of this application;
FIG. 6A and FIG. 6B are a schematic flowchart of still another communication method according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a chip system according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network compliant with a requirement of the 3rd generation partnership project (3rd generation partnership project, 3GPP) standard, which is referred to as a 3GPP network for short. The 3GPP network usually includes but is not limited to a 5th generation (5th generation, 5G) mobile communication network, a 4th generation (4th generation, 4G) mobile communication network, another future communication system, and the like.

For ease of description, the PLMN or the 5G network is used as an example for description in embodiments of this application.

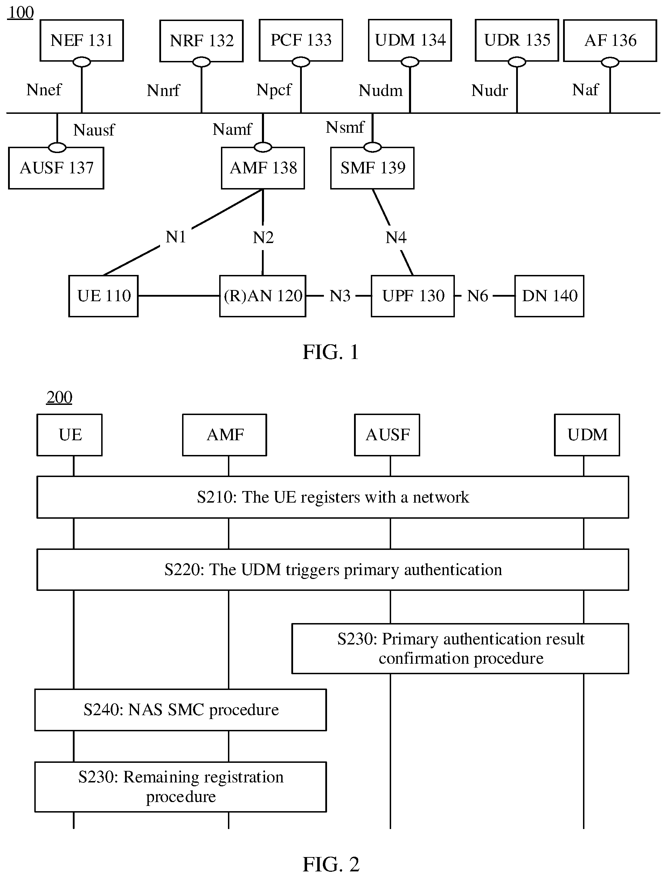

FIG. 1 is a diagram of a network architecture 100. A 5G network architecture based on a service-based architecture (service-based architecture, SBA) in a non-roaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes functions of network elements of each part.

The terminal device part may include a terminal device 110. The terminal device 110 is a device that provides voice and/or data connectivity for a user. The terminal device 110 may also be referred to as user equipment UE. The terminal device 110 in this application is a device having a wireless transceiver function, and may communicate with one or more core network (core network, CN) devices through an access network device (which may also be referred to as an access device) in the (radio) access network (R)AN 120. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on the land, including an indoor device, an outdoor device, a handheld device, or a vehicle-mounted device; may be deployed on the water (for example, on a ship); or may be deployed in the air (for example, on an airplane, a balloon, or a satellite). The terminal device 110 may be a cellular phone, a cordless phone, a session initiation protocol (session initiation protocol, SIP) phone, a smartphone, a mobile phone, a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in the internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in transportation security, a wireless terminal in a smart city, a wireless terminal in a smart home, or the like. The terminal device herein is a 3GPP terminal. A type or a category of the terminal device is not limited in embodiments of this application. For ease of description, in this application, an example in which the UE represents the terminal device is used for description below.

The (R)AN 120 may include one or more access network elements or access network devices. An interface between the access network device and the terminal device may be a Uu interface (or referred to as an air interface, that is, a message exchanged between the access network device and the terminal device may be referred to as an air interface message). Certainly, in future communication, names of these interfaces may remain unchanged, or may be replaced with other names. This is not limited in this application. The (R)AN 120 is a device that provides a wireless communication function for the terminal device 110, is a node or device that may enable the terminal device to access a wireless network, and may also be referred to as a network device. The (R)AN 120 may be considered as a sub-network of an operator network, and is an implementation system between a service node in the operator network and the terminal device 110. For example, the terminal device 110 may be connected to the service node in the operator network through the (R)AN 120, to obtain a service provided by the service node. For ease of description, in all embodiments of this application, the foregoing apparatuses that provide the wireless communication function for the terminal device 110 are collectively referred to as access network devices, referred to as RANs for short. It should be understood that a specific type of the access network device is not limited in this specification.

The CN part may include but is not limited to the following network functions (network functions, NFs): a user plane function (user plane function, UPF) 130, a network exposure function (network exposure function, NEF) 131, a network repository function (network repository function, NRF) 132, a policy control function (policy control function, PCF) 133, a unified data management (unified data management, UDM) function 134, a unified data repository (unified data repository, UDR) function 135, an application function (application function, AF) 136, an authentication server function (authentication server function, AUSF) 137, an access and mobility management function (access and mobility management function, AMF) 138, and a session management function (session management function, SMF) 139.

A data network DN 140 may also be referred to as a packet data network (packet data network, PDN), and is usually a network located outside the operator network, for example, a third-party network.

The following further briefly describes functions of the NFs included in the CN.
1. The UPF 130 is a gateway provided by an operator, and is a gateway for communication between the operator network and the DN 140. The UPF network function 130 include user plane-related functions such as packet routing and transmission, packet inspection, traffic usage reporting, quality of service (quality of service, QoS) handling, lawful interception, uplink packet verification, and downlink packet buffering.
2. The NEF 131 is a control plane function provided by the operator, mainly enables a third party to use a service provided by the network, and supports exposure of capabilities, events, and data analytics by the network, secure provision of information from an external application to the PLMN, translation of internal-external information of the PLMN, and the like.
3. The NRF 132 is a control plane function provided by the operator, and may be configured to maintain real-time information of a network function and a service in the network.
4. The PCF 133 is a control plane function provided by the operator, mainly supports provision of a unified policy framework to control network behavior and provision of policy rules for control plane network functions, and is responsible for obtaining user subscription information related to policy decisions.
5. The UDM 134 is a control plane function provided by the operator, and is responsible for storage of a subscription permanent identifier (subscription permanent identifier, SUPI) of a subscriber in the operator network, a generic public subscription identifier (generic public subscription identifier, GPSI) of the subscriber, a credential (credential), and other information.
6. The UDR 135 is a control plane function provided by the operator, provides functions of storage and retrieval of subscription data for the UDM, provides functions of storage and retrieval of policy data for the PCF, stores and retrieves NF group ID (group ID) information of a user, and so on.
7. The AF 136 is a control plane function provided by the operator, and mainly interacts with other NFs in the PLMN to provide corresponding services such as provision of visited network selection information for roaming UE, traffic routing guidance, and access to the NEF 131.
8. The AUSF 137 is a control plane function provided by the operator, and is usually used for primary authentication, that is, authentication between the terminal device 110 (a subscriber) and the operator network.
9. The AMF 138 is a control plane network function provided by the operator network, and is responsible for access control and mobility management when the terminal device 110 accesses the operator network, for example, including functions such as mobility status management, allocation of a temporary user identity, and user authentication and authorization.
10. The SMF 139 is a control plane network function provided by the operator network, is responsible for managing a protocol data unit (protocol data unit, PDU) session (including session establishment, modification, and release) of the terminal device 110, and is for selection and reselection of a user plane function network element, internet protocol (internet protocol, IP) address allocation of the terminal device, quality of service (quality of service, QoS) control, and the like. The PDU session is a channel for transmitting a PDU, and the terminal device and the DN 140 transmit the PDU to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

In FIG. 1, Nnef, Nnrf, Npcf, Nudm, Nudr, Naf, Nausf, Namf, Nsmf, N1, N2, N3, N4, and N6 are sequence numbers of interfaces. For example, for meanings of the interface sequence numbers, refer to meanings defined in the 3GPP standard protocol. The meanings of the interface sequence numbers are not limited in this application. It should be noted that the names of the interfaces between the network functions in FIG. 1 are merely examples. In a specific implementation, the interfaces in the system architecture may alternatively have other names. This is not limited in this application. In addition, names of messages (or signaling) transmitted between the foregoing network elements are merely examples, and do not constitute any limitation on functions of the messages.

It should be noted that in the architecture shown in FIG. 1, an interface between the (R)AN and the CN may also be referred to as an NG interface (not shown in the figure), and the (R)AN and the CN are connected through the NG interface. The NG interface may include an NG-C interface and an NG-U interface. The NG-C interface is a control plane interface connecting the (R)AN and the AMF, and is configured to transmit control plane data. The NG-U interface is a user plane interface connecting the (R)AN and the UPF, and is configured to transmit user plane data.

It should be understood that the network architecture 100 is merely a network architecture described from a perspective of the service-based architecture. In the service-based architecture, the PLMN may orderly combine a part or all of network functions based on a specific scenario requirement, to implement customization of a capability and a service of the network, to deploy dedicated networks for different services, that is, implement 5G network slicing (network slicing). With a network slicing technology, the operator can respond to customer requirements more flexibly and quickly and support flexible allocation of network resources.

For ease of description, in embodiments of this application, a network function (like the NEF 131, ..., and the SMF 139) is collectively/briefly referred to as an NF. In other words, the NF described below in embodiments of this application may be replaced with any network function. In addition, in embodiments of this application, the session management function SMF 139 is referred to as the SMF for short, and the terminal device 110 is referred to as the UE. In other words, in embodiments of this application, the SMF described below may be replaced with the session management function, and the UE described below may be replaced with the terminal device. Some network functions are merely described as examples in FIG. 1, and the NF described below is not limited to the network functions shown in FIG. 1.

It should be understood that the AMF, the SMF, the UPF, the NEF, the AUSF, the NRF, the PCF, and the UDM shown in FIG. 1 may be understood as network elements in the core network that are configured to implement different functions, and for example, may be combined as required to form a network slice. These core network elements may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in the 6G network, the terms in 5G may still be used for a part or all of the network elements, or other names may be used.

Currently, to ensure network security, a primary authentication procedure needs to be performed on a terminal device (for example, UE) that accesses a network, to be specific, identity authentication and authorization need to be performed on the terminal device. The terminal device can access the network only after authentication succeeds.

FIG. 2 is a schematic flowchart of registration of UE with a network. As shown in FIG. 2, the method 200 includes the following plurality of steps. For a part that is not described in detail, refer to related descriptions in an existing protocol.

S210: The UE registers with the network.

For example, the UE sends an N1 message to an authentication anchor network element (Security anchor function, SEAF), for requesting to register with the network. Optionally, the N1 message may be a registration request message, and the registration request message carries a subscription concealed identifier (Subscription Concealed Identifier, SUCI) or a 5G globally unique temporary identifier (5G Globally Unique Temporary Identifier, 5G-GUTI) of the UE. The SEAF is co-located with an AMF. This may be understood as: The SEAF is a part of the AMF. In other words, the UE may send the registration request message to the AMF to request to register with the network.

Correspondingly, after receiving the N1 message from the UE, the SEAF may initiate authentication to the UE according to a local policy in any process of establishing a signaling connection with the UE.

For example, when the SEAF expects to start authentication on the UE, the SEAF sends a Nausf_UEAuthentication_Authenticate Request message to an AUSF to invoke a Nausf_UEAuthentication service. The message carries a serving network name (serving network name, SN Name), and carries the SUCI or a SUPI. The SN Name is for binding an anchor key to a serving network by using a serving network identifier (serving network identifier), to ensure that the anchor key is for secure communication between the UE and a 5G core network. It should be understood that, if the SEAF receives the SUCI from the UE, the message carries the SUCI; or if the SEAF receives the 5G-GUTI from the UE, the SEAF determines the SUPI based on the 5G-GUTI, and uses the message to carry the SUPI.

It should be understood that the SUPI includes a SUPI type (type) and a value. There are four SUPI types: an IMSI, an NSI (network specific identifier), a global line identifier (GLI), and a global cable identifier (GCI). There are two formats of the value of the SUPI: an IMSI and a NAI. In order not to expose the SUPI of a user on an air interface, a part other than the SUPI type in the SUPI is usually calculated to obtain a result, and the result is a part of the SUCI.

Correspondingly, after the AUSF receives the Nausf_UEAuthentication_Authenticate Request message from the SEAF, the AUSF may compare the SN Name carried in the message with an expected SN Name to check whether the SEAF that is in the serving network and that initiates the authentication request is authorized to use the SN Name in the Nausf_UEAuthentication_Authenticate Request message. The AUSF may temporarily store the received serving network name. If the serving network is not authorized to use the SN Name, the AUSF sends a Nausf_UEAuthentication_Authenticate Response message to the SEAF. The message indicates that "the serving network is not authorized", in other words, the SEAF may reject the registration procedure of the UE. If the serving network is authorized to use the SN Name, the AUSF sends an Nudm_UEAuthentication_Get Request message to a UDM, for requesting to perform primary authentication on the UE, and carries the SUCI/SUPI and the SN Name.

Correspondingly, after the UDM receives the Nudm_UEAuthentication_Get Request message from the AUSF, if the message carries the SUCI, the UDM first needs to parse the message to obtain the SUPI, and then selects, based on the SUPI, an authentication method, for example, a 5G authentication and key agreement (5G Authentication and Key Agreement, 5G-AKA) authentication method or an extensible authentication protocol-authentication and key agreement (Extensible Authentication Protocol, EAP-AKA') authentication method.

It should be understood that the current 5G network supports two authentication methods: the 5G-AKA authentication method and the EAP-AKA' authentication method. How the UDM selects the authentication method based on the SUPI is not limited in this application. For example, an implementation in which the UDM selects the authentication method based on the SUPI includes: An operator may configure the authentication method in subscription data, and the UDM may determine the authentication method after obtaining the SUPI of the UE; or the UDM selects the authentication method based on the SUPI type in the SUPI. For example, if the SUPI type is the IMSI, the 5G-AKA authentication method is selected. If the SUPI type is the NAI, the EAP-AKA' authentication method is selected.

S220: The UDM performs a primary authentication procedure.

For example, the UDM sends an authentication vector, for example, a 5G-AKA authentication vector or an EAP-AKA' authentication vector, to the AUSF to respond to the authentication request message of the AUSF, to perform primary authentication on the UE. For a specific authentication implementation, refer to related descriptions in Chapter 6 of the existing protocol TS 33.501.

S230: Perform a primary authentication result confirmation procedure.

For example, an authentication result may be obtained through the foregoing primary authentication on the UE, and the AUSF and the UDM perform the primary authentication result confirmation procedure.

In an example, if the UDM selects the EAP-AKA' authentication method to perform authentication on the UE, after the AUSF receives an EAP-Response/AKA'-Challenge message from the UE or the SEAF and the AUSF completes authentication on the UE, the AUSF sends an Nudm_UEAuthentication_ResultConfirmation Request message to the UDM.

In another example, if the UDM selects the 5G-AKA authentication method to perform authentication on the UE, after the AUSF receives the Nausf_UEAuthentication_Authenticate Request message from the SEAF, and authentication performed by the AUSF on the UE succeeds, the AUSF sends an Nudm_UEAuthentication_ResultConfirmation Request message to the UDM.

The Nudm_UEAuthentication_ResultConfirmation Request message carries an authentication status of the UE, where the authentication status includes the SUPI of the UE, an authentication timestamp, the authentication result (for example, an authentication success or failure), the authentication method (namely, an authentication type (for example, the EAP-AKA' authentication method or the 5G-AKA authentication method)), and the serving network name SN Name. Optionally, to prevent fraud, the AUSF may include only information about the authentication success in the message according to an operator policy.

Correspondingly, the UDM stores the authentication status of the UE, where the authentication status includes the SUPI, the authentication timestamp, the authentication result, and the serving network name SN Name.

It should be noted that the UE may separately register with different AMFs, for example, an AMF 1 and an AMF 2, by using a 3GPP access technology and a non-3GPP access technology. In other words, the AMF 1 and the AMF 2 may serve same UE. Through the foregoing registration and authentication procedure, the UDM stores an authentication result and an authentication timestamp twice, and stores information about an SN Name #1 and an SN Name #2. A quantity of AMFs is not limited in this application.

Further, the UDM sends an Nudm_UEAuthentication_ResultConfirmation Response message to the AUSF.

It should be understood that the UDM may detect and accept a spoofing attack of a specific type according to an operator policy. For example, the UDM stores an ID and time of a visited network. Optionally, the operator may classify visited networks. For example, in a first type, an AMF needs to immediately send an Nudm_UECM_Registration Request message; in a second type, it only needs to be checked that an Nudm_UECM_Registration Request message is received within a period of time shortly after completion of an authentication procedure; and in a third type, no check is needed. If the UDM receives a new Nudm_UECM_Registration Request message, the UDM checks whether a new visited network is the same as a previously stored visited network. If the visited networks are the same, the registration request is accepted. If the visited networks are different, a request reject message is sent, where the request reject message carries a cause value, and the cause value is for notifying an AMF that a Nausf_UEAuthentication_Authenticate Request message needs to be sent to the AUSF to trigger the primary authentication procedure.

S240: Optionally, perform a NAS security mode command (security mode command, SMC) procedure.

It should be understood that the NAS SMC procedure aims to protect the registration request of the UE against a man-in-the-middle attack, and prevent an attacker from modifying an information element IE containing a UE security capability provided by the UE in the registration request.

For example, the AMF activates NAS integrity protection, and sends a NAS security mode command message to the UE. Correspondingly, after receiving the NAS security mode command message from the AMF, the UE needs to verify the NAS security mode command message, including checking whether UE security capabilities sent by the AMF match security capabilities stored in the UE, to ensure that the attacker does not modify these capabilities; and verifies integrity protection by using an indicated NAS integrity algorithm and a NAS integrity key based on KAMF indicated by an ngKSI. In addition, after sending the NAS security mode command message, the AMF activates NAS uplink deciphering. If integrity of the NAS security mode command message is successfully verified, the UE should start NAS integrity protection and ciphering/deciphering by using a security context indicated by the ngKSI. Further, the UE sends a NAS security mode complete message to the AMF for ciphering and integrity protection, and the AMF activates NAS downlink ciphering.

S250: Perform a remaining registration procedure.

In the remaining registration procedure, the AMF may register with the UDM. This procedure is for registration, with the UDM, of the AMF that is serving the UE. After receiving registration information of the AMF, the UDM stores information related to the AMF, for example, an ID of the AMF. It should be noted that the UE may separately register with different AMFs, for example, an AMF 1 and an AMF 2, by using a 3GPP access technology and a non-3GPP access technology. In other words, the AMF 1 and the AMF 2 may serve same UE. The UDM may store information related to a plurality of AMFs, for example, an ID of the AMF 1 and an ID of the AMF 2.

For example, the SEAF sends a registration response message to the UE, for indicating that registration of the UE succeeds, so that the UE can request to establish a session to access various services in a data network.

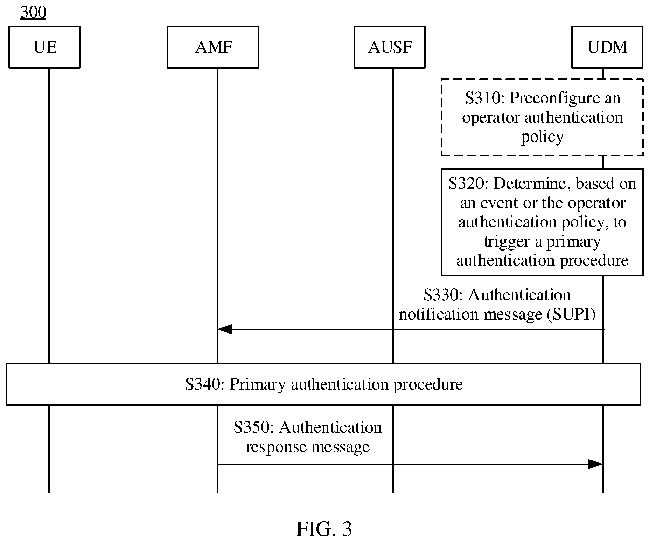

FIG. 3 is a diagram of triggering a primary authentication procedure by a home network (for example, a UDM in the home network). As shown in FIG. 3, the method 300 includes the following plurality of steps. For a part that is not described in detail, refer to related descriptions in an existing protocol.

S310: Optionally, a UDM preconfigures an operator authentication policy, to determine to initiate the network-triggered primary authentication procedure for UE.

S320: When determining to initiate the home network-triggered primary authentication procedure, the UDM determines an AMF 1 that serves the UE.

For example, the UDM determines, based on an event (for example, SoR/UPU or a request from an AAnF) or an authentication policy, to trigger and perform the authentication procedure of the home network for the UE. For example, the AAnF sends an Nudm_UECM_AuthTrigger request to the UDM to enable the UDM to perform primary authentication. Correspondingly, if the UDM determines, based on the received event and the preconfigured operator authentication policy, to initiate the home network--triggered primary authentication procedure for the UE, the UDM determines a serving AMF/SEAF of the UE.

It can be learned from the method 200 that the UE may register with the AMF 1 and the AMF 2 by using the 3GPP access technology or the non-3GPP access technology. This indicates that the UE is currently served by the AMF 1 and the AMF 2. That is, the UE is currently connected to the AMF 1 and the AMF 2, in other words, the UE may be found through the AMF 1 and the AMF 2. Correspondingly, after the primary authentication, the UDM stores information about the AMF 1 and the AMF 2, for example, the ID of the AMF 1 and the ID of the AMF 2. To be specific, the UDM knows that the AMF 1 and the AMF 2 are serving the UE. When subsequently determining to trigger re-authentication on the UE, the UDM may find the AMF 1 and the AMF 2 that serve the UE. For example, the UDM selects, according to the operator authentication policy, the AMF 1 to perform re-authentication on the UE.

S330: The UDM sends an authentication notification message to the AMF 1, and correspondingly, the AMF 1 receives the authentication notification message from the UDM.

The authentication notification message is for requesting the AMF 1 to trigger authentication on the UE, and the authentication notification message includes a SUPI of the UE.

Correspondingly, after receiving an authentication response message from the UDM, the AMF 1 determines, based on a local authentication policy and a status of the UE, whether to trigger primary authentication on the UE. If primary authentication can be initiated, the AMF 1 determines to perform primary authentication on the UE.

S340: The AMF 1 performs the primary authentication procedure.

For a specific implementation in which the AMF 1 performs primary authentication, refer to the related descriptions in the method 200.

It should be noted that "authentication" and "authentication" in this application may be interchangeably used. For example, "primary authentication" may be replaced with "primary authentication", and "authentication pending flag" may be replaced with "authentication pending flag". For ease of description, "authentication", "primary authentication", "pending flag", and "authentication pending flag" are uniformly used below.

Further, the AMF 1 may send an authentication response message to the UDM.

S350: The AMF 1 sends the authentication response message to the UDM, and correspondingly, the UDM receives the authentication response message from the AMF 1.

The AMF 1 returns the authentication response message to the UDM in response to the authentication notification message. The authentication response message is for notifying whether the request of the UDM succeeds or fails. When the authentication response message does not carry a failure cause value, it means that the AMF can perform the primary authentication on the UE, that is, perform the procedure of step S340. If the AMF 1 cannot perform the primary authentication procedure according to step S340, for example, when the UE is unreachable or the AMF 1 cannot find the UE, the authentication response message carries a failure cause value, where the failure cause value indicates that the AMF 1 cannot start primary authentication on the UE.

It should be noted that an execution sequence of step S340 and step S350 is not limited.

Considering that in an existing solution, authentication is performed on only the SUPI and single network slice selection assistance information (Single Network Slice Selection Assistance Information, S-NSSAI) used by the user equipment, a user or external device that is not authentic or is illegitimate may access a network or use a network service, thereby increasing network security risks.

In view of this, this application provides a communication method and a communication apparatus, to ensure network security by triggering authentication on a user identifier (for example, a user ID). For example, user equipment may send, to a first network element, a first message that carries a security-protected first user identifier, so that the first network element initiates authentication on a first user based on the first message, and feeds back an authentication result for the first user to the user equipment. In this way, the user equipment and the first network element can determine authenticity and legitimacy of the first user, thereby providing a service for the first user, and improving user experience while ensuring network session security.

Specifically, the following ideas may be included but are not limited to:

### (1) Triggering of authentication on a user ID by using an authentication request sent by the user equipment UE

After a terminal (for example, the user equipment UE) perceives that a user (for example, the first user) logs in (the terminal may perceive, at a first moment or a second moment, that the user logs in, where the first moment is a moment at which the UE is in a registered state, and the second moment is a moment at which the UE is in a deregistered state) (if the terminal perceives the login at the second moment, the terminal needs to first send a message to a network side, to request to register the terminal with the network side), a signaling sending unit in the terminal sends the first message to the first network element. The first network element is a network element responsible for authentication in a network, the first message is used to request the network side to perform authentication on the user, the first message carries a first identifier, and the first identifier is a user identifier of the logged-in user. After receiving the first message, the first network element initiates an authentication procedure for the first identifier, and then sends a second message to the terminal. The second message indicates an authentication result for the first user. If authentication succeeds, the user is allowed to log in. If the authentication fails, the user is forbidden to log in.

Optionally, in embodiments of this application, the first identifier may be replaced with the first user identifier.

### (2) Completion of authentication on the user ID by using a user ID registration procedure

Solution 1: When the user logs in to the terminal at the first moment

For example, the terminal sends a third message to the first network element. The third message includes the first identifier and/or first indication information, the third message is used to request the network side to register the user, and the first indication information indicates that a registration type is registration for the user. In other words, the registration type indicated by the first indication information indicates that the third message is sent for registration for the user. After receiving the third message, the first network element authenticates the first identifier. In other words, the first network element authenticates, based on the third message, the user corresponding to the first identifier.

Optionally, the third message is a registration request message (namely, an example of the first message), and is used to request the network side to register the user.

### Solution 2: When the user logs in to the terminal at the second moment

For example, the terminal sends a third message to the first network element. After receiving the third message, the first network element authenticates the terminal UE and the user (user), and sends a fourth message to the terminal at a third moment. The fourth message indicates that the terminal can successfully register with the network. The third moment may be a moment after the UE is authenticated, or may be a moment after both the UE and the user are authenticated.

Optionally, the third message is a registration request message (namely, an example of the first message), and is used to request the network side to register the user and the UE. Optionally, the fourth message is a registration complete message.

Specifically, for the user equipment UE side, the following is included: adding logic for triggering sending of an authentication request: when the user logs in to the UE, adding a message (namely, an example of the first message) sent to an AMF (namely, an example of the first network element), where the message is used to request a core network to authenticate the user corresponding to the user ID; and initiating user-level registration with the network, and using a registration message to carry the user ID and the registration type; or using a registration message to carry only the user ID. It should be understood that the registration type indicates that the registration message is sent for registration for the user.

For the first network element side, the following is included: adding logic for triggering a primary authentication procedure: receiving a UE authentication request; searching for a binding relationship from a UDM based on the authentication request, and performing primary authentication after the binding relationship is valid; receiving a user-level registration request sent by the UE; and recording, in a UE context, the user allowed to log in to the UE, and adding a linked user to the UE context.

The following describes in detail the communication method provided in embodiments of this application with reference to the accompanying drawings. Embodiments provided in this application are applicable to any communication scenario in which a transmit-end device communicates with a receive-end device, for example, may be applied to the communication system shown in FIG. 1.

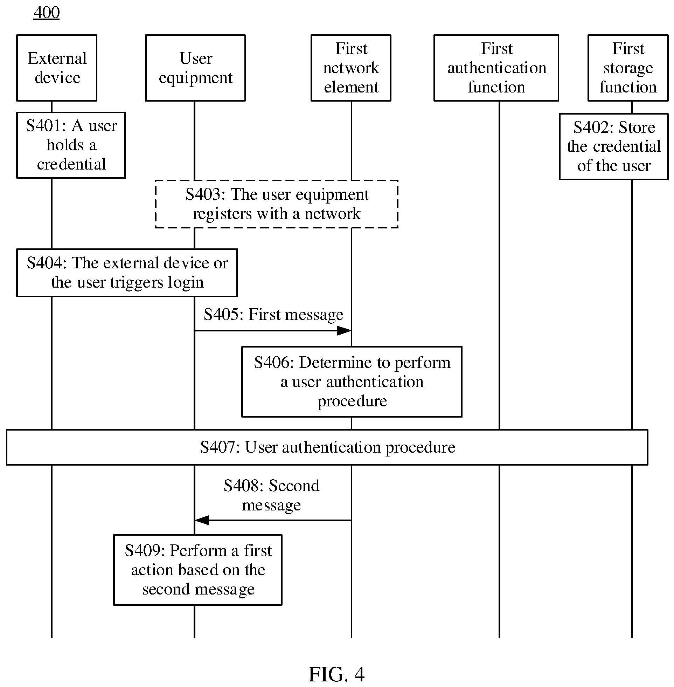

FIG. 4 is a schematic flowchart of a communication method 400 according to an embodiment of this application. As shown in FIG. 4, the method procedure may be described by using an external device, user equipment (for example, UE), a first network element (for example, an AMF or an SMF), a first authentication function (for example, an AUSF), or a first storage function or a credential storage function (for example, a UDM) as an execution entity. The method includes the following steps. For parts that are not described in detail, refer to related descriptions in an existing protocol.

S401: A user holds a credential.

In this application, the credential is configuration information that enables the user to be uniquely identified and authenticated. The credential may be in a form of a group of character strings or a certificate. A specific format of the credential is not limited in embodiments.

That the user holds the credential may be understood as that the credential may be stored in the user equipment (for example, in a memory of the user equipment), or may not be stored in the user equipment (for example, in a USIM card, or in a personal notebook of the user, or in memory of the user).

It should be understood that the credential of the user may be used on the external device or the user equipment. The external device may be a terminal device (for example, a mobile phone without a SIM card inserted), or may be a device that can be used by the user to establish a connection with the user equipment UE (for example, a tablet computer without a 3GPP wireless function).

In embodiments of this application, the credential of the user may be used in a subsequent user authentication process. For example, the user equipment generates an authentication vector based on the credential of the user. For a specific implementation, refer to related descriptions of the following step S407. Details are not described herein.

S402: The first storage function stores the credential of the user.

For example, the credential of the user is stored in the credential storage function (namely, an example of the first storage function). That the credential of the user is stored in the credential storage function means that the credential is stored on a per-user basis. If the user is represented by a user ID (or user ID), the credential of the user ID is unique. On a terminal side, the user may log in to different external devices or different user equipment by using the credential.

S403: The user equipment successfully registers with the first network element.

In other words, that the user equipment successfully registers with the first network element may be understood as that the user equipment registers with a network. For example, the user equipment sends a registration request message to the first network element, to request to register with the network, and the user equipment receives a registration complete message from the network. The registration request message carries an identifier UE ID (for example, an SUCI or 5G-GUTI) of the user equipment. Optionally, for a specific implementation in which the user equipment successfully registers with the first network element, refer to the foregoing related descriptions of the method 200.

It should be noted that this step is optional, and may be understood as follows: The user equipment UE may register with the AMF (namely, an example of the first network element) in advance (for example, if the UE has been used, it indicates that the user equipment has registered with the first network element); or the user equipment may initiate registration after being triggered (for example, the user equipment has been used before, but the user equipment also presents a deregistered state as the user goes offline). In this case, a condition for triggering the user equipment is that the user equipment is logged in by the user, or the UE receives a message from the external device.

For example, the user equipment may request, in advance, the first network element to register with the network (for example, if the user equipment has been used by the user before step S403 is performed, it means that the user equipment has requested the first network element before for registration and registration succeeds, and it may be understood that the user equipment is always in a registered state); or the user equipment may initiate registration to the first network element after being triggered by the user for login (for example, the user equipment has been used before step S403 is performed, but the user equipment also presents the deregistered state as the user goes offline, or the user equipment enters the deregistered state because the user equipment has not been used for a long time, or the user equipment is in a factory setting and has never been used by the user). In this case, a condition for triggering the user equipment to initiate the registration to the first network element may be: The user equipment is logged in by the user (for example, a first user), or the user equipment receives a message (or a pop-up window) from the external device, where the message (or the pop-up window) indicates that the first user triggers login to the external device.

S404: The external device or the user triggers login.

For example, the user (namely, an example of the first user) logs in to the external device or logs in to the user equipment by using the user ID (or user ID) (namely, an example of a first user identifier). For example, if the user logs in to the external device, the external device establishes a connection with the user equipment. Correspondingly, the user equipment determines that the user logs in.

In other words, the user equipment may determine, based on the communication connection established between the external device and the user equipment, or the message (or the pop-up window) received by the user equipment from the external device, that the user logs in to the external device. For another example, if the user logs in to the user equipment, the user may log in to the user equipment with a user name. Correspondingly, the user equipment may determine, based on the user name, that the user logs in.

In other words, there is one or more methods for the user equipment to determine that the user logs in. For example, the user equipment determines user login based on the connection established between the user equipment and the external device, or the user equipment determines user login by being logged in by the user, or the user equipment determines user login based on the message (or the pop-up window) received from the external device, where the message (or the pop-up window) indicates that the first user logs in to the external device.

It should be noted that there is one or more methods for establishing the connection between the external device and the user equipment, for example, establishing the connection by using a Bluetooth technology or a Wi-Fi technology. This is not specifically limited in embodiments.

S405: The user equipment sends a first message to the first network element.

Correspondingly, the first network element receives the first message from the user equipment.

For example, after determining that the user (namely, an example of the first user) logs in, the user equipment generates the first message, and sends the first message to the first network element.

The first message includes the security-protected first user identifier of the first user using the user equipment, for example, the user ID (user ID). It should be understood that the first user identifier is under security protection, including integrity security protection and/or confidentiality security protection. For example, the user ID (user ID) in the first message is under confidentiality protection.

It should be noted that the first user using the user equipment may be understood as a user logging in to the user equipment, or a user logging in to the external device that establishes the communication connection with the user equipment.

Optionally, the first message is under security protection, including integrity security protection and/or confidentiality security protection. It should be noted that a protection manner in which the first user identifier is under security protection is not limited in this application, for example, may be security protection specifically for the first user identifier, or may be security protection for the first message carrying the first user identifier.

For example, the first network element may be a network element that processes user authentication in a core network of an operator. For example, the first network element may be a mobility management network element or a session management network element. In this case, the first message is a message that carries the user ID (user ID) and that is finally received by the first network element. For example, when the first network element is a mobility management network element, the first message may be a NAS message (namely, an example of a first NAS message), for example, a registration request message, a user authentication request message, or a NAS SMP message. For example, when the first network element is a session management network element, the first message may be a message carried in a session management container (namely, an example of a first SM message), for example, a PDU session establishment request message, a user authentication request message, or an EAP-Response/Identity message. A type of the first network element and a specific implementation of the first message are not limited in embodiments.

The following describes an example in which the first message or the first user identifier, for example, the user ID (user ID), carried in the first message, is under security protection.

In an implementation, the first message carries the security-protected user ID (user ID). For example, the user equipment performs security protection on the first NAS message (namely, an example of the first message) or the first user identifier by using a 5G NAS security context, where security protection includes confidentiality protection and/or integrity protection.

In a first example, before the user equipment sends the first message to the first network element, the user equipment has registered with the network (in this case, step S403 has been performed), primary authentication has been completed between the network side and the user equipment based on an identifier (for example, an SUPI) of the user equipment, and the NAS security context is activated by using a NAS SMC procedure. Therefore, if information or a parameter exchanged between the user equipment and the first network element is under security protection, the first message or the first user identifier may be under security protection.

For example, before the first network element receives, from the user equipment, the first message that carries the first user identifier under security protection, the method further includes: The first network element receives a registration request message from the user equipment, where the registration request message includes the identifier of the user equipment; the first network element determines, based on the registration request message, to initiate a primary authentication procedure for the user equipment; the first network element sends a NAS SMC message to the user equipment after the primary authentication procedure for the user equipment, where the NAS SMC message is used to activate the NAS security context; and the first network element receives a NAS SMP message from the user equipment. For a specific implementation, refer to the related descriptions in the method 200.

In a second example, before the user equipment sends the first message to the first network element, the user equipment has registered with the network (in this case, step S403 has been performed), primary authentication has been completed between the network side and the user equipment based on an identifier (for example, an SUPI) of the user equipment, and the network side triggers a NAS SMC procedure to activate the NAS security context.

For example, the first message is a NAS SMP message. Therefore, the first message or the first user identifier may be under security protection. For example, before the first network element receives, from the user equipment, the first message that carries the first user identifier under security protection, the method further includes: The first network element receives a registration request message from the user equipment, where the registration request message includes the identifier of the user equipment; the first network element determines, based on the registration request message, to initiate a primary authentication procedure for the user equipment; and the first network element sends a NAS SMC message to the user equipment after the primary authentication procedure for the user equipment.

In a third example, before the user equipment sends the first message to the first network element, the user equipment has registered with the network (in this case, step S403 has been performed), primary authentication has been completed between the network side and the user equipment based on an identifier (for example, an SUPI) of the user equipment, and the NAS security context is activated by using a NAS SMC procedure. Therefore, the first message or the first user identifier may be under security protection. In addition, in this implementation, because the user equipment uses the registration request message to carry both the identifier of the user equipment and the user ID (user ID), the network side may first perform primary authentication on the user equipment, and then initiate an authentication procedure for the user after primary authentication on the user equipment succeeds.

For example, before the first network element receives, from the user equipment, the first message that carries the first user identifier under security protection, the method further includes: The first network element receives a registration request message from the user equipment, where the registration request message includes the identifier of the user equipment and a second user identifier of a second user; the first network element determines, based on the registration request message, to initiate a primary authentication procedure for the user equipment; and the first network element initiates an authentication procedure for the second user after primary authentication on the user equipment succeeds.

In another implementation, the first message carries fourth indication information, and the fourth indication information indicates to authenticate the user ID (user ID) (namely, an example of the first user). A representation form of the fourth indication information is not limited in this application. For example, the fourth indication information may be user ID-based capability information or the user ID (user ID). The user ID-based capability information indicates that the user equipment supports authentication on the user corresponding to the user ID (user ID).

It should be understood that the foregoing two implementations may be implemented independently or in combination. For example, the first message carries both the user ID (user ID) under security protection and the fourth indication information. This is not limited in embodiments.

The following describes an example of a representation form of the first user identifier, for example, the user ID (user ID), carried in the first message.

For example, the user ID includes at least an information part (namely, an example of a first information part) that uniquely identifies the user and a routing information part (namely, an example of a second information part) that is used to determine the credential storage function (namely, an example of the first storage function). At least one of the first network element and a network element including a first authentication function (namely, an example of the first authentication function) may determine a credential storage function network element based on routing information of the credential storage function. The credential storage function may determine, based on the information part that uniquely identifies the user, the credential corresponding to the user.

Further, the first network element and/or the first authentication function send/sends a user authentication vector request message to the credential storage function. After receiving the user authentication vector request message, the credential storage function generates a user authentication vector based on the credential corresponding to the user, and feeds back the user authentication vector.

The following describes an example of the representation form of the user ID in embodiments of this application. It should be noted that the representation form of the user ID is not limited in this application.

In an implementation, the user ID may be represented in an NAI format, for example, username@realm. The username part is used to carry the information that uniquely identifies the user, for example, a 64-bit character string, and may be information that is easy for the user to remember. The realm part carries the routing information that can be used to determine the credential storage function.

In another implementation, the user ID may be represented in a fully qualified domain name (fully qualified domain name, FQDN) format.

In embodiments of this application, before the user equipment sends the first message to the first network element, the method further includes: The user equipment obtains the first user identifier, for example, the user ID (user ID).

For example, the user equipment may obtain the user ID in one or more of the following specific implementations.

In a first implementation, the user equipment may obtain the user ID through the connection with the user equipment.

For example, the message (or the pop-up window) sent by the external device to the user equipment carries the user ID. It should be understood that, in this implementation, the communication connection is established between the external device and the user equipment.

In a second implementation, the user equipment may obtain the user ID based on a user input.

For example, when the user logs in to the user equipment by using the user name (for example, a mobile phone number or a WeChat account of the user), the user equipment may determine the user name as the user ID of the user.

In a third implementation, the user equipment may first obtain some information of the user ID based on the message sent by the external device or a user input, and then determine the user ID.

For example, the user equipment first obtains the information part (namely, an example of the first information part) that uniquely identifies the user in the user ID, and then determines the user ID. In an example, after the user enters an account whose user name is 123456, the user equipment obtains 123456 and determines 123456 as the information part that uniquely identifies the user. Then, the user equipment determines a home public land mobile network (home public land mobile network, HPLMN) ID and/or a router identifier (router identifier, RID) of the user equipment as the routing information that is used to determine the credential storage function, for example, 5gc.RID. HPLMN ID, and performs combination to obtain a user ID that meets the NAI format, for example, 123456@5gc.RID.HPLMN ID.

In a fourth implementation, the information part (namely, an example of the first information part) that uniquely identifies the user in the user ID includes confidentiality-protected information that uniquely identifies the user.

In other words, the information part that uniquely identifies the user in the user ID in this implementation may be considered as information that uniquely identifies the user after being confidentiality protected (obtained by establishing the communication connection with the external device or obtained based on a user input), namely, the user ID.

S406: The first network element determines to perform a user authentication procedure.

For example, the first network element determines, based on the first message, to initiate an authentication procedure for the first user. For example, the first network element determines, based on first indication information associated with the first message, to initiate the user authentication procedure for the first user. Optionally, the first indication information may be carried in the first message, or may not be carried in the first message. This is not limited in this application.

The first indication information may be represented by one or more of the following, for example, a name of the first message, the first user identifier, or a specified information element in the first message.

For example, the method for the first network element to determine to perform the user authentication procedure includes at least one of the following:
(1) The first network element may determine, based on the name of the first message, to perform the user authentication procedure, for example, the name of the first message may be a user authentication request message (for example, Namf_UserAuthentication_Authenticate Request); or
(2) the first network element may determine, based on the specific information element (information element, IE) in the first message, to perform the user authentication procedure, for example, the IE may be a registration type (indicating that the first message may be a registration request message for the user), or a specific field in the first message (used to identify the first user using the user equipment), for example, a value of the field is "1", indicating that the first message is a user authentication request; or
(3) the first network element determines, based on local configuration information, to perform the user authentication procedure, for example, the configuration information indicates that when the first network element receives the first user identifier under security protection, or the configuration information indicates that when the first network element receives, from the user equipment, the first message that carries the first user identifier under security protection, or the configuration information indicates that when the first network element receives the first message under security protection from the user equipment, the user authentication procedure for the user (user) is triggered.

S407: Perform the user authentication procedure.

For example, the user authentication procedure occurs among the first authentication function, the credential storage function (namely, an example of the first storage function), the user equipment, and the first user.

In an implementation, performing the authentication procedure for the first user includes: The first network element determines (or discovers) the first authentication function; the first network element sends the user authentication request message to the first authentication function, where the user authentication request message includes the first user identifier, and the user authentication request message is used to request to authenticate the first user; the first authentication function sends the user authentication vector request message to the first storage function, where the user authentication vector request message includes the first user identifier, the first storage function generates the user authentication vector based on the first user identifier, the first storage function sends the user authentication vector to the first authentication function, and the first authentication function completes user authentication with the user equipment and the first user based on the user authentication vector. Finally, the first authentication function sends a user authentication response message to the first network element, where the user authentication response message indicates an authentication result for the first user, and indicate that the first user is successfully authenticated or fails to be authenticated.

Optionally, the authentication function for authenticating the user may be the same as the authentication function for performing primary authentication on the user equipment. In some implementations, that the first network element determines the first authentication function includes: obtaining the first authentication function for performing primary authentication on the user equipment.

Optionally, the user authentication response message includes the authentication result for the first user and/or first user authentication result indication information, the first user authentication result indication information indicates the authentication result for the first user, and the authentication result for the first user indicates that the first user is successfully authenticated or fails to be authenticated.

It should be noted that the user authentication procedure is a bidirectional authentication procedure, that is, includes authentication performed by the network side on the first user and also includes authentication performed by the first user on the network side. For a specific implementation in which the first network element determines (or discovers) the first authentication function and performs the user authentication procedure, refer to related descriptions in the following method 500. Details are not described herein.

In this application, the first storage function may have one or more possible implementations. In an implementation, the first storage function is used to store only the credential corresponding to the user ID (namely, an example of the first user identifier), for example, the UDM. In an implementation, the first storage function is used to store the credential corresponding to the user ID, and is further used to authenticate the user, and finally determine that the user is authentic and legitimate, for example, is an authentication, authorization, accounting (authentication, authorization, accounting, AAA) server.

In this application, the first authentication function has one or more implementations. For example, the first authentication function may be a proxy service function, and is used to forward a user authentication-related message to a network element that performs a user authentication function. For example, the first authentication function is an authentication, authorization, accounting proxy (authentication, authorization, accounting proxy, AAA-P) or a network slice-specific authentication and authorization function (network slice-specific authentication and authorization function, NSSAAF), and the network element that performs the user authentication function may be an AAA, an AMF, an AUSF, or a UDM. For another example, the first authentication function is a network element that performs a user authentication function, for example, an AAA, an AMF, an AUSF, or a UDM.

S408: The first network element sends a second message to the user equipment.

Correspondingly, the user equipment receives the second message from the first network element.

The second message may be a response message of the first message, or may be a message unrelated to the first message.

It should be understood that the second message indicates the authentication result for the first user.

Optionally, the second message may be under security protection like the first message. Details are not described again.

In a first example, the second message carries a user authentication result (namely, an example of the authentication result for the first user), and the user authentication result includes that user authentication succeeds or user authentication fails. Optionally, when user authentication fails, the first network element may send a cause value to the user equipment, to indicate that user authentication fails.

In a second example, the second message carries second user authentication result indication information, the second user authentication result indication information indicates the authentication result for the first user, and the authentication result for the first user indicates that the first user is successfully authenticated or user authentication fails.

Optionally, the second user authentication result indication information may be the same as or different from the first user authentication result indication information. For example, an information format of the first user authentication result indication information and an information format of the second user authentication result indication information change.

Optionally, the second message may further carry the first user identifier. Optionally, the first user identifier may be under security protection. In an example, the second message is not under security protection, but the second message may carry the first user identifier under security protection. In another example, if the second message is under security protection, it indicates that the first user identifier carried in the second message is under security protection.

In this application, the second message has one or more implementations. This is not specifically limited in embodiments. For example, after determining the user authentication result (namely, an example of the authentication result for the first user), the first network element sends the second message to the user equipment.

Optionally, when the user authentication result indicates that user authentication succeeds, the first network element may associate and store together, the identifier (for example, the user ID) of the first user, with at least one of the authentication result for the first user (for example, user authentication succeeds), authentication success time, and the identifier (for example, the SUPI) of the user equipment, so that after the first network element subsequently receives the first message from the user equipment, the first network element may determine, based on the locally stored authentication result for the first user (for example, user authentication succeeds) associated with the user ID, not to initiate the authentication procedure for the first user, thereby providing a service for the first user, reducing signaling overheads, and ensuring user service experience.

Optionally, the authentication success time may be understood as a moment at which the network side completes authentication on the first user, or a moment at which the first network element receives the authentication result for the first user.

Optionally, the first network element may further obtain a valid time period from the first authentication function, where the valid time period indicates a valid time period in which the first user can access the network, or indicates a valid time period in which the network side acknowledges or confirms authenticity and legitimacy of the first user. In other words, the first network element may provide a service for the first user within the valid time period, and may refuse to provide a service for the first user within an invalid time period.

S409: The user equipment determines, based on the second message, to perform a first action.

Further, the user equipment may send the authentication result for the first user (user) to the first user or the external device.

For example, when the second message indicates that user authentication succeeds, the user equipment may perform a subsequent procedure for the external device or the user, for example, continues to perform a PDU session establishment procedure or a registration procedure. When the second message indicates that user authentication fails, the user equipment rejects performing the subsequent procedure for the external device or the user. For example, when the user equipment is connected to the external device, the user equipment may release the connection with the external device, or send a user authentication failure message to the external device through the connection, or the user equipment may trigger the network side to perform user authentication on the first user again, for example, the user equipment re-performs the foregoing step S405, or the user equipment may forcibly log out the user from the user equipment.

In other words, when the second message indicates that the authentication result for the first user is that user authentication succeeds, it indicates that the first user is authentic and legitimate, and the user equipment may continue to perform the subsequent procedure for the external device or the first user. On the contrary, when the second message indicates that the authentication result for the first user is that user authentication fails, it indicates that the first user is not authentic and is illegitimate, and the user equipment may refuse to perform the subsequent procedure for the external device or the user.

It should be noted that the first action herein may be replaced with another description like a first service, a first business, or a first operation.

Optionally, when the second message indicates that user authentication succeeds, the user equipment may associate and store together at least one of authentication success and the authentication success time with the user ID. That is, when the second message indicates that the first user is successfully authenticated, the user equipment may associate and store together, with the identifier of the first user (for example, the user ID), at least one of the authentication result for the first user (for example, user authentication succeeds) and the authentication success time, so that when the first user subsequently logs in to the user equipment or the external device again, the user equipment may determine, based on the locally stored authentication result for the first user (for example, user authentication succeeds) associated with the user ID, not to trigger the network side to authenticate the first user, thereby directly providing a service for the first user, reducing signaling overheads, and improving user service experience.

Optionally, if the first network element obtains the valid time period from the first authentication function, the user equipment may further obtain the valid time period from the first network element, where the valid time period indicates the valid time period in which the first user can access the network, or indicates the valid time period in which the network side acknowledges or confirms authenticity and legitimacy of the first user. In other words, the first user may obtain a service within the valid time period, and cannot obtain a service within an invalid time period.

Based on the foregoing solution, a procedure for authenticating the user ID is provided. On the basis that the user equipment registers with the network, after the user logs in to the user equipment, an authentication request is sent to the network, or the network side authenticates the user ID through registration of the user equipment. This resolves a problem that when the user ID accesses the network, the network cannot learn whether the user ID is legitimate, thereby ensuring security of a network session and ensuring normal implementation of functions such as QoS traffic control and accounting related to the user.

Specifically, the foregoing solution provides the procedure for performing user authentication on the first user identifier (for example, the user ID). On the basis that the user equipment registers with the network, after it is determined that the first user logs in to the user equipment or the external device, the user equipment is triggered to send, to the network side, the first message carrying the first user identifier under security protection of the first user that uses the user equipment, to request to authenticate the first user, or bidirectional authentication between the network side and the first user is implemented based on the registration request message (namely, an example of the first message) for the user equipment that carries the first user identifier under security protection. In this way, a service is provided for the first user when it is ensured that both the user equipment and the first user are legitimate or authentic, thereby ensuring network session security and reducing potential security risks.

It should be understood that the first message on the user equipment side is triggered by user login or the connection between the user equipment and the external device. This differs from an initiation occasion of existing primary authentication and slice authentication. Details are described above. The first network element determines, based on the first message, that user authentication needs to be performed. Compared with primary authentication and slice authentication, a determining condition changes. Details are described above. A network element covered by user authentication are different from network elements covered by existing primary authentication and slice authentication for the user equipment. Details are described above. The user equipment needs to know the user authentication result. Because user authentication does not occur on the user equipment, and may be transparently passed through for the user equipment, a modification is required so that the user equipment knows the user authentication result. The first network element and the user equipment store the user authentication result for subsequent processing. For example, the first network element or the user equipment may determine, based on whether the authentication result for the first user is stored, whether to authenticate the first user, or determine, based on whether the stored authentication result for the first user is authentication success or authentication failure, whether to authenticate the first user, whether to provide a service for the first user, and the like.

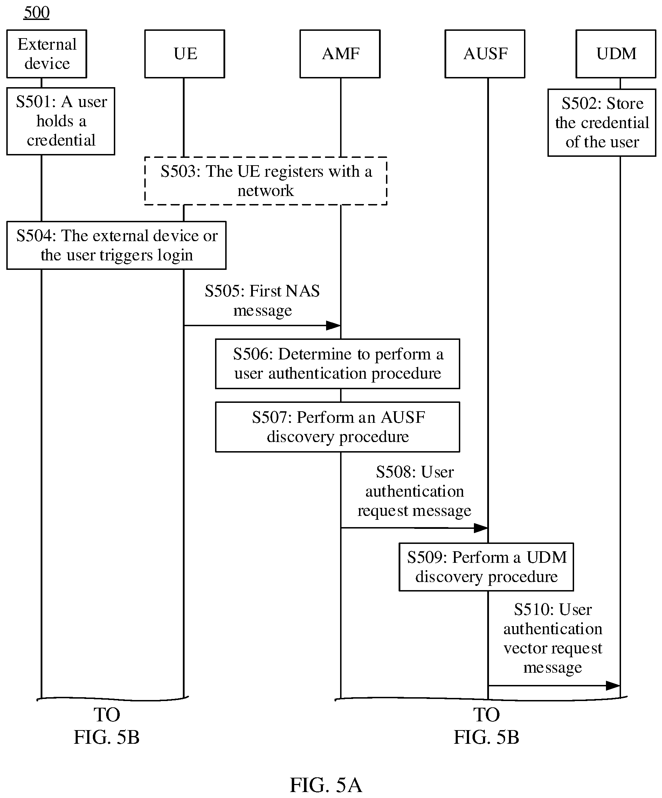

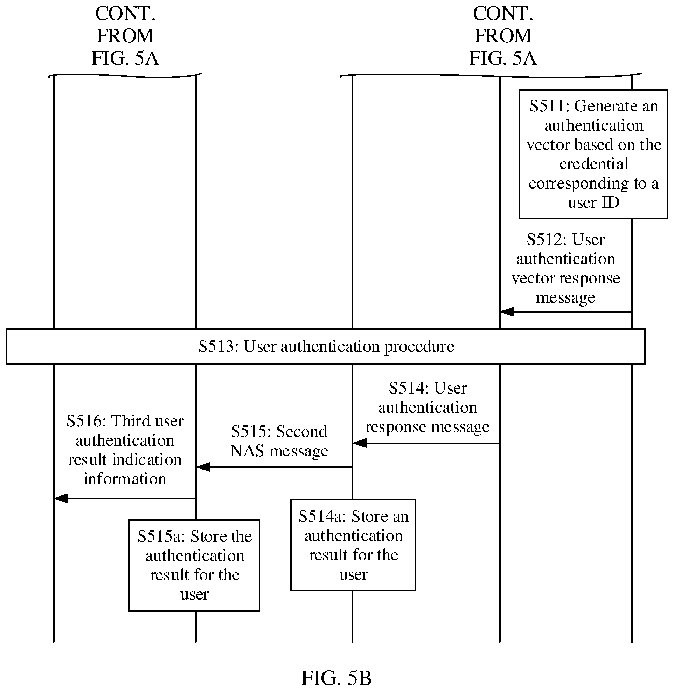

FIG. 5A and FIG. 5B a schematic flowchart of a communication method 500 according to an embodiment of this application. As shown in FIG. 5A and FIG. 5B, the method procedure may be described by using an external device, user equipment UE, an AMF, an AUSF, or a UDM as an execution entity. The method mainly resolves a problem that currently, after a user logs in to the UE by using a user ID, a network side does not authenticate legitimacy of the user ID (that is, the network side cannot determine whether the user corresponding to the user ID is allowed to access a network). The method includes the following steps. For a part that is not described in detail, refer to related descriptions in an existing protocol.

S501: The user holds a credential.

In this application, the credential is configuration information that enables the user to be uniquely identified and authenticated. The credential may be in a form of a group of character strings or a certificate. A specific format of the credential is not limited in embodiments.

That the user holds the credential may be understood as that the credential may be stored in the user equipment (for example, in a memory of the user equipment), or may not be stored in the user equipment (for example, in a USIM card, or in a personal notebook of the user, or in memory of the user).

It should be understood that the credential of the user may be used on the external device or the UE. The external device may be a terminal device (for example, a mobile phone without a SIM card inserted), or may be a device that can be used by the user to establish a connection with the UE (for example, a tablet computer without a 3GPP wireless function).

S502: The UDM stores the credential of the user.

For example, the credential of the user is stored in a credential storage function. That the credential of the user is stored in the credential storage function means that the credential is stored on a per-user basis. If the user is represented by the user ID (or user ID), the credential of the user ID is unique. On a terminal side, the user may log in to different external devices or different UE by using the credential.

S503: The UE registers with the network.

Optionally, the UE successfully registers with the AMF. For a specific implementation, refer to the foregoing related descriptions. This step is optional. The UE may register with the AMF in advance (for example, if the UE has been used, it indicates that the UE has registered with the AMF). Alternatively, the UE may initiate registration after being triggered (for example, the UE has been used before, but the UE also presents a deregistered state as the user goes offline). In this case, a condition for triggering the UE is that the UE is logged in by the user or the UE receives a message from the external device.

S504: The external device or the user triggers login.

For example, the user logs in to the external device or logs in to the user equipment by using the user ID (or user ID). If the user logs in to the external device, the external device establishes a connection with the user equipment. Correspondingly, the user equipment determines that the user logs in. There is one or more methods for the user equipment to determine that the user logs in. For example, the user equipment determines user login based on the connection established with the external device, or the user equipment determines user login by being logged in by the user. It should be noted that there is one or more methods for establishing the connection between the external device and the user equipment, for example, by using a Bluetooth technology or a Wi-Fi technology. This is not specifically limited in embodiments.

For specific implementations of steps S501 to S504, refer to the related descriptions of steps S401 to S404 in the foregoing method 400.

S505: The UE sends a first NAS message (namely, an example of a first message) to the AMF (namely, an example of a first network element).

Correspondingly, the AMF receives the first NAS message from the UE.

For example, the first NAS message carries at least one of the following: UE identity information (namely, an example of an identifier of the user equipment), the user ID (namely, an example of a first user identifier), or first indication information.

The user ID is under security protection, including integrity security protection and/or confidentiality security protection. For example, the user ID is under confidentiality protection.

Optionally, the first NAS message is under security protection, including integrity security protection and/or confidentiality security protection. It should be noted that a protection manner in which the user ID is under security protection is not limited in this application, for example, may be security protection specifically for the user ID, or may be security protection for the first NAS message carrying the user ID.

In an implementation, the first NAS message is a registration request message, and the registration request message carries at least two of the UE identity information, the user ID, and the first indication information. Optionally, the registration request message may carry only the user ID.

### (1) UE identity information

For example, the UE identity information may also be described as a UE identifier (for example, a UE ID), for example, may be a SUCI or a 5G-GUTI.

### (2) User ID

For example, the user ID may include an information part that uniquely identifies the user and a routing information part that is used to determine the credential storage function. The credential storage function may determine, based on the information part that uniquely identifies the user, the credential corresponding to the user.

In an example, the user ID is represented in an NAI format: username@realm. The username part is used to carry the information that uniquely identifies the user, for example, a 64-bit character string, and may be information that is easy for the user to remember. The realm part carries the routing information that can be used to determine the credential storage function.

In another example, the user ID is represented in an FQDN format. A representation form of the user ID is not limited in this application.

### (3) First indication information

The first indication information indicates that the user logs in, for example, indicates that the user logs in to the user equipment, or indicates that the UE receives a message (or a pop-up window) sent by the external device, where the message (or the pop-up window) indicates that the user logs in to the external device.

Optionally, the first indication information may be a registration type. For example, the registration type indicates that the registration request message is used to request registration for the user. Alternatively, the first indication information may be a user ID. Alternatively, the first indication information may be bit indication information. For example, when the bit indication information is set to 1, it indicates that the registration request message is not used for UE registration, or indicates that the registration request message is sent because the user logs in or receives the message from the external device. Alternatively, the first indication information may be user ID authentication capability information (for example, capability of User-Id based authentication) of the UE. For example, when the UE has a user authentication capability, it indicates that the registration request message is used to request registration for the user or the external device. In this case, the network may perform user authentication.

It should be noted that, when the UE identity information is a 5G-GUTI, the user ID is under confidentiality protection. When the UE identity information is a 5G-SUCI, the user ID may be placed in a confidentiality protection part.

Specifically, when the first NAS message carries the UE identity information, and the UE identity information is a 5G-GUTI, the user ID is under confidentiality protection and/or integrity security protection. When the first NAS message carries the UE identity information, and the UE identity information is a SUCI, the user ID may be placed in the confidentiality protection part.

It should be understood that, if the first NAS message carries both the UE identity information and the user ID, the network side may first perform primary authentication on the UE, and then the network side triggers a NAS SMC procedure to activate a NAS security context. For example, the AMF sends a NAS SMC message to the UE, and the AMF receives a NAS SMP message from the UE. Further, after primary authentication of the UE succeeds, an authentication procedure for the user is initiated.

In another implementation, the first NAS message is a user authentication request message, the user authentication request message may be considered as a new type of NAS message, and the user authentication request message carries at least one of the UE identity information, the user ID, and the first indication information.
(1) UE identity information, which is a SUCI or a 5G-GUTI
(2) User ID, for details, refer to the foregoing descriptions
(3) First indication information

The first indication information indicates that the user logs in, for example, indicates that the user logs in to the user equipment, or indicates that the UE receives a message (or a pop-up window) sent by the external device. It should be understood that the message (or the pop-up window) indicates that the user logs in to the external device.

Optionally, the first indication information may be a NAS message type. For example, the NAS message type indicates that the user authentication request message is used to request to authenticate the user. Alternatively, the first indication information may be a user ID. Alternatively, the first indication information may be user ID authentication capability information of the UE. For example, when the UE has a user authentication capability, it indicates that the user authentication request message is sent because the user logs in to the user equipment or the user equipment receives the message from the external device. In this case, the network may perform user authentication.

It should be noted that, when the first NAS message carries the UE identity information, and the UE identity information is a 5G-GUTI, the user ID is under confidentiality protection, or when the UE identity information is a 5G-SUCI, the user ID may be placed in a confidentiality protection part. When the first NAS message does not carry the UE identity information, the user ID may be under confidentiality protection by using a NAS confidentiality protection key.

In another implementation, the first NAS message is a NAS security mode complete (security mode complete, SMP) message, and the NAS SMP message carries the user ID. For a specific implementation, refer to the foregoing descriptions.

For example, before step S505 is performed, the method further includes: The AMF receives a registration request message from the UE, where the registration request message includes the UE identity information (for example, the 5G-SUCI or the 5G-GUTI); the AMF determines, based on the registration request message, to initiate a primary authentication procedure for the UE; and the AMF sends a NAS SMC message to the UE after the primary authentication procedure for the user equipment, where the NAS SMC message is used to activate a NAS security context. In other words, in this implementation, in the NAS SMC procedure, the UE uses the NAS SMP message to carry the user ID under security protection, thereby reducing signaling overheads while ensuring network session security.

S506: The AMF determines to perform a user authentication procedure.

Specifically, the AMF determines, based on information carried in the first NAS message or information associated with the first NAS message, to perform the user authentication procedure.

In a possible implementation, the AMF determines, based on the user ID in the first NAS message, to perform the user authentication procedure.

In another possible implementation, the AMF determines, based on the first indication information in the first NAS message, to perform the user authentication procedure.

For example, the first indication information may be the registration type (indicating that the first NAS message may be a registration request message for the user), a specific field associated with the user or the user ID (user ID), or the user ID authentication capability information of the UE.

In still another possible implementation, the AMF determines, based on a name of the first message, for example, a user authentication request message (for example, Namf_UserAuthentication_Authenticate Request), to perform the user authentication procedure.

Optionally, the AMF may determine, based on local configuration information, to perform the user authentication procedure. For a specific implementation, refer to the related descriptions in the method 400.

It should be noted that an occasion on which the AMF determines that user authentication needs to be performed is not limited in this application.

Optionally, after receiving the first NAS message, the AMF may determine that there may be one or more occasions on which user authentication needs to be performed. For example, after receiving the first NAS message, the AMF determines that user authentication needs to be performed, for example, after a specific procedure is completed. The specific procedure herein may be the primary authentication procedure for the UE or a registration procedure for the UE, that is, user authentication is performed after the UE successfully registers. For related descriptions of the primary authentication procedure, refer to the foregoing related descriptions. This means that the AMF needs to first authenticate the UE, and then can authenticate the user only after the UE is successfully authenticated. For example, when the first NAS message carries the UE identity information, if the UE identity information is a SUCI, the AMF first performs the primary authentication procedure, and then performs the user authentication procedure.

Optionally, the occasion on which the AMF determines that user authentication needs to be performed may be the NAS SMC procedure. For example, the AMF triggers user authentication after receiving the NAS SMP message sent by the UE. Alternatively, the occasion on which the AMF determines that user authentication needs to be performed may be: The AMF may perform, after obtaining subscription data of the UE, an action of determining user authentication. For example, if the AMF determines that the UE can be used for user login or can perform the user authentication procedure instead of the external device, the AMF performs the action of determining user authentication. For example, if the subscription data of the UE indicates that the user ID can be bound to the UE, the AMF determines to perform user authentication.

Optionally, the occasion on which the AMF determines that user authentication needs to be performed may alternatively be: The AMF performs the determining action after obtaining subscription data of the user ID currently logged in to the UE. For example, if the AMF determines that the user ID on the UE can be used for login to the UE or the external device, the AMF performs the action of determining user authentication.

S507: The AMF performs an AUSF discovery procedure.

For example, when the AMF determines to perform user authentication, the AMF performs the AUSF discovery procedure.

In an implementation, the AMF may discover, based on a local configuration, an AUSF that can perform user authentication.

In another implementation, the AMF determines, based on the user ID, an AUSF that can perform user authentication.

It should be noted that, if the first NAS message is a registration request message, this step may be performed before a registration accept message is sent, or may be performed after a registration accept message is sent. In other words, before step S506 is performed, the AMF may send the third NAS message to the UE, where the third NAS message is a registration accept message. Alternatively, after step S515 is performed, the AMF may send a third NAS message to the UE, where the third NAS message is a registration accept message. In other words, a sequence of the registration procedure and the user authentication procedure is not limited in this application. To be specific, the AMF may send a registration complete message to the UE before the user authentication procedure is completed or after the user authentication procedure is completed.

The following describes a specific implementation in which the AMF discovers (or determines) the AUSF.

For example, when the AMF selects the AUSF, that the AMF discovers the AUSF based on the user ID on the UE specifically includes:
discovering the AUSF based on a home network identifier (home network identifier) in the user ID, a routing indicator (routing indicator), and the local configuration; or
discovering, through an NRF, the AUSF based on an AUSF group identifier (AUSF Group ID) in a context of the user ID in the AMF, where when the AMF discovers the AUSF by using the NRF, the NRF may send the AUSF group identifier to the AMF, and the AMF may send the group identifier to another AMF, so that the another AMF selects the AUSF based on the AUSF group identifier.

Discovering, through the NRF, the AUSF based on the user ID means: When the AMF discovers the AUSF by using the NRF, the AMF may send the user ID on the UE to the NRF, so that the NRF performs AUSF discovery based on the user ID on the UE.

In a non-roaming scenario, the NRF searches for a corresponding AUSF based on the user ID in an Nnrf_NFDiscovery_Request message sent by the AMF, or sends and provides, based on an AUSF group to which the corresponding AUSF belongs, information about all AUSF instances in the group. The NRF may use Nnrf_NFDiscovery_Request Response to carry an AUSF identifier, and an FQDN or an IP address of the AUSF.

In a roaming scenario, an NRF in a serving network forwards, to an NRF in a home network, an Nnrf_NFDiscovery_Request message sent by the AMF, to search for a corresponding AUSF based on the user ID, or sends and provides, based on an AUSF group to which the corresponding AUSF belongs, information about all AUSF instances in the group. The NRF in the home network sends Nnrf_NFDiscovery_Request Response carrying an AUSF identifier, and an FQDN or an IP address of the AUSF to the AMF through the NRF in the serving network.

S508: The AMF sends a user authentication request message to the AUSF.

Correspondingly, the AUSF receives the user authentication request message from the AMF.

For example, the user authentication request message carries the user ID, that is, the user authentication request message is used to request to authenticate the user (user).

Optionally, the user authentication request message may further carry second indication information, to indicate to authenticate the user (user). The second indication information indicates the user authentication request message, or the second indication information may be a user authentication request message, or indicates that a current procedure is a user authentication procedure, specifically, indicates that the user authentication request message is sent for the user authentication procedure.

Optionally, there is one or more implementations of the second indication information. For example, the second indication information is a message itself, namely, the user authentication request message. For another example, the second indication information is a new service-oriented operation. For example, the second indication information may be a user authentication type. For example, when the authentication type is user authentication, it indicates that the user authentication request message is a user authentication request, and is not for UE authentication. For another example, the second indication information may alternatively be bit indication information that represents an authentication type. For example, when the bit indication information is set to 1, it indicates that the user authentication request message is not for UE authentication, or indicates that the user authentication request message is for user authentication requested by the user or the external device. An implementation of the second indication information is not limited in embodiments.

Optionally, the user authentication request message may further carry an SN Name. The SN Name may be a PLMN ID of the AMF, or may be a fixed character string, for example, "user authentication". The SN Name is not specifically limited in embodiments.

S509: The AUSF performs a UDM discovery procedure.

For example, before the AUSF performs the UDM discovery procedure, the AUSF determines, based on the user authentication request message in step S508, to perform the user authentication procedure. For example, the AUSF determines, based on the second indication information, to perform the user authentication procedure, to trigger the UDM discovery procedure. For example, the AUSF determines, based on the user ID carried in the user authentication request message, to perform the user authentication procedure, to trigger the UDM discovery procedure. For example, the AUSF determines, based on the user ID and the second indication information that are carried in the user authentication request message, to perform the user authentication procedure, to trigger the UDM discovery procedure. For example, the AUSF may:
discover the UDM based on the home network identifier in the user ID and the routing indicator;
discover, through the NRF, the UDM based on a UDM group ID (UDM Group ID) in the context of the user ID in the AMF; or
discover, through the NRF, the UDM based on the user ID. Optionally, the AUSF may determine, based on the user authentication request message in step S508 not carrying the SN Name, to perform the user authentication procedure. This is because the SN Name is a serving network name associated with the UE. If the user authentication request message does not carry the SN Name, the AUSF may understand that the user authentication request message is not for UE authentication, but is for user authentication.

S510: The AUSF sends a user authentication vector request message (for example, Nudm_UEAuthentication_Request) to the UDM.

Correspondingly, the UDM receives the user authentication vector request message, to request to obtain an authentication vector.

For example, the user authentication vector request message carries the user ID.

Optionally, the user authentication vector request message further carries third indication information. The third indication information indicates that the message is a user authentication vector request message, or indicates that the current procedure is a user authentication procedure, specifically, indicates that the current user authentication vector request message is sent for the user authentication procedure.

Optionally, there is one or more implementations of the third indication information. For example, the third indication information is a message itself. For another example, the third indication information is a new service-oriented operation. For example, the third indication information may be a user authentication type. For example, when the authentication type is user authentication, it indicates that the user authentication vector request message is used to request an authentication vector for the user, instead of being used to request an authentication vector for the UE, or indicates that the user authentication vector request message is sent for user authentication requested by the user or the external device. For another example, the third indication information may alternatively be bit indication information that represents an authentication type. For example, when the bit indication information is set to 1, it indicates that the user authentication vector request message is not used to request an authentication vector for the UE, or indicates that the authentication vector request message is for an authentication vector requested by the user or the external device. An implementation of the third indication information is not limited in embodiments.

Optionally, if the AUSF receives the SN Name in the user authentication request message in step S508, the SN Name is further carried in the following step S510.

S511: The UDM generates the authentication vector based on the credential corresponding to the user ID.

For example, the UDM selects an authentication manner (EAP-AKA) based on user subscription information, and generates a corresponding authentication vector AV.

S512: The UDM sends a user authentication vector obtaining response message to the AUSF.

Correspondingly, the AUSF receives the user authentication vector response message.

The user authentication vector response message carries the user authentication vector.

For example, the UDM sends the authentication vector to the AUSF by using the user authentication vector response message (for example, Nudm_UEAuthentication_Response). Optionally, the message may further carry the user ID (if the user authentication vector request message sent by the AUSF to the UDM carries the user ID, the user authentication vector response message carries the user ID).

S513: Perform the user authentication procedure.

For example, the AUSF performs the user authentication procedure with the user logging in to the external device or the UE. There is one or more implementations of the user authentication procedure, for example, the user authentication procedure may be an EAP-AKA authentication procedure or a 5G-AKA authentication procedure. An implementation of the user authentication procedure is not specifically limited in embodiments.

S514: The AUSF sends a user authentication response message to the AMF.

Correspondingly, the AMF receives the user authentication response message from the AUSF.

For example, the user authentication response message carries first user authentication result indication information and the user ID.
(1) The first user authentication result indication information indicates that user authentication succeeds or user authentication fails, that is, the first user authentication result indication information indicates an authentication result for a first user.
(2) The first user authentication indication information may be bit indication information, enumerated indication information, or a message. For example, when the first user authentication indication information is bit indication information, a bit 0 indicates that authentication fails, and a bit 1 indicates that authentication succeeds. For another example, when the first user authentication indication information is enumerated indication information, a character string "Failure" indicates that authentication fails, and a character string "success" indicates that authentication succeeds. For another example, when the first user authentication indication information is a message, EAP-Failure indicates that authentication fails, and EAP-Success indicates that authentication succeeds. After determining a user authentication result, the AUSF sends the user authentication response message to the AMF.

Optionally, when the first user authentication result indication information indicates that authentication succeeds, the AMF locally creates context information of the user ID. Optionally, the AMF stores at least one of authentication success time and a correspondence between the user ID and the SUPI, or the AMF stores a correspondence between the user ID, and the SUPI and/or authentication success time.

S514a: The AMF stores an authentication result for the user.

S515: The AMF sends a second NAS message to the UE.

Correspondingly, the UE receives the second NAS message from the AMF.

The second NAS message carries second user authentication result indication information, and the second user authentication result indication information indicates a user authentication result, for example, user authentication succeeds or user authentication fails.

In an implementation, the second user authentication result indication information is the same as the first user authentication result indication information.

For example, when the second user authentication result indication information indicates that user authentication succeeds, the UE allows the user or the external device to continue to use the UE, to provide a service for the UE. When the second user authentication result indication information indicates that user authentication fails, the UE allows the user or the external device to continue to attempt authentication again, or brings the user offline from the UE and releases the connection between the UE and the external device. When the UE allows the user or the external device to continue to attempt authentication again, the UE resends the first NAS message to the AMF. Optionally, when the second user authentication result indication information indicates that user authentication succeeds, the UE locally creates the context information of the user ID. Optionally, the UE stores user ID authentication success time.

S515a: The UE stores the authentication result for the user.

Optionally, when the user authentication result indicated by the second NAS message indicates that user authentication succeeds, the UE may associate and store together, with the user ID, at least one of authentication success and the authentication success time, so that when the user subsequently logs in to the UE or the external device again, the UE may determine, based on the locally stored user authentication result (that is, user authentication succeeds) associated with the user ID, not to trigger the network to authenticate the first user, thereby providing a service for the first user, reducing signaling overheads, and ensuring user service experience.

S516: The UE sends third user authentication result indication information to the user or the external device.

Correspondingly, the external device receives the third user authentication result indication information from the UE.

The third user authentication result indication information indicates a user authentication result, for example, user authentication succeeds or user authentication fails.

In an implementation, the third user authentication result indication information, the second user authentication result indication information, and the first user authentication result indication information are the same.

For example, when the UE sends the third user authentication result indication information to the external device, one or more implementations are included. For example, the UE may display notification information, and the notification information is displayed as "Login succeeds". When the UE sends the third user authentication result indication information to the external device, the third user authentication result indication information is transmitted in a manner of adapting to a protocol between the UE and the external device.

It should be noted that, in this embodiment, the foregoing execution entity AUSF may be replaced with an NSSAAF, an AAA-Proxy, or an NSSAAF and an AAA-Proxy, and the UDM may be replaced with an AAA server. When the UDM is replaced with the AAA server and the AUSF is replaced with the AAA-P, the AAA-P is an optional network element. If the AAA-P is not required, related adjustment in this embodiment is as follows: Step S508 and step S509 are not required. In step S510, sending is performed by the AMF, and in step S513, sending is performed to the AMF. A termination point of step S513 is the AAA server. A sender in step S514 is the AAA server.

It should be noted that, authenticating the user ID in embodiments may be understood as: authenticating the user corresponding to the user ID. In other words, authenticating the user ID in this application may be replaced with: authenticating the user.

In conclusion, the embodiment in FIG. 5A and FIG. 5B mainly makes the following improvements.

On the UE side, when the user ID is used for login to the UE, the UE initiates an authentication request to trigger the network side to authenticate the user ID. The request includes the user ID.

Case 1: The UE enters a registered state through a registration procedure (the SUCI is authenticated in the registration procedure). In this case, the user logs in to the UE, and the UE initiates the authentication request to authenticate the user ID.

Case 2: The UE is in a deregistered state. In this case, the user logs in to the UE. After the UE initiates a registration procedure and enters the registered state, the UE initiates the authentication request to authenticate the user ID.

In addition, after obtaining the user authentication result for the user ID from the AMF, the UE may store a correspondence between the user authentication result and the user ID. For example, when the user authentication result indicates that user authentication succeeds, the UE may store an association relationship between user authentication success and the user ID, so that when the user subsequently logs in to the UE or the external device again, the UE may determine, based on the locally stored user authentication result (that is, user authentication succeeds) associated with the user ID, that the user is authentic and legitimate, and may not request the network side to authenticate the user, to provide a service for the user, thereby reducing signaling overheads and ensuring user service experience.

On the AMF side:
Authentication on the user is triggered based on a received NAS message containing an authentication request.

Whether an authentication server is internal or external, that is, whether authentication is performed by the AMF/AUSF or by the external AAA server, is determined based on the user ID.

The AUSF (option a: the AUSF performs authentication)/UDM (an authentication vector is generated, option b: the AMF performs authentication)/AAA server (option c: the AAA server performs authentication) is discovered based on the user ID.

An authentication result is returned to the UE. If the authentication result indicates that authentication succeeds, the network can provide a requested payment service for the user ID. If the authentication result indicates that authentication fails, the user cannot access the network, but an authentication result for the SUCI identifying the UE is not affected. That is, the UE can access the network.

According to the foregoing solutions, after perceiving that the user logs in to the user equipment or that the user equipment is connected to the external device, the user equipment UE actively sends the first message to the first network element AMF for notification of user information (for example, the user ID), to request to trigger the user authentication procedure, thereby ensuring network security. This implementation enables bidirectional authentication between the UE and the serving network, ensuring that a core network side can know that the user ID is a legitimate ID and provide network services accordingly. In the conventional technology, the network side and the UE can only implement bidirectional authentication for the SUCI, and can only determine legitimacy of the SUPI. Therefore, in a user ID scenario, legitimacy of a user ID that is used to log in to the UE cannot be ensured. After the user logs in to the user equipment or the external device by using the user ID, the user is authenticated by using a new NAS message (namely, an example of the first message), namely, the authentication request for the user ID.

Optionally, in embodiments of this application, authentication on the user ID definitely occurs on the basis that authentication on the SUPI succeeds. The authentication result for the user ID is independent of the authentication result for the SUPI. In other words, the authentication result for the user ID does not affect the authentication result for the SUPI. That is, the authentication result for the first user does not affect the authentication result for the user equipment, and in other words, does not affect use of the UE corresponding to the SUPI in the 5GC. Specifically, even if authentication on the user fails, and consequently the user cannot access the network through the user equipment, other users are not affected in accessing the network through the user equipment (that is, a failure in authenticating the first user does not change a result of previous successful authentication on the user equipment).

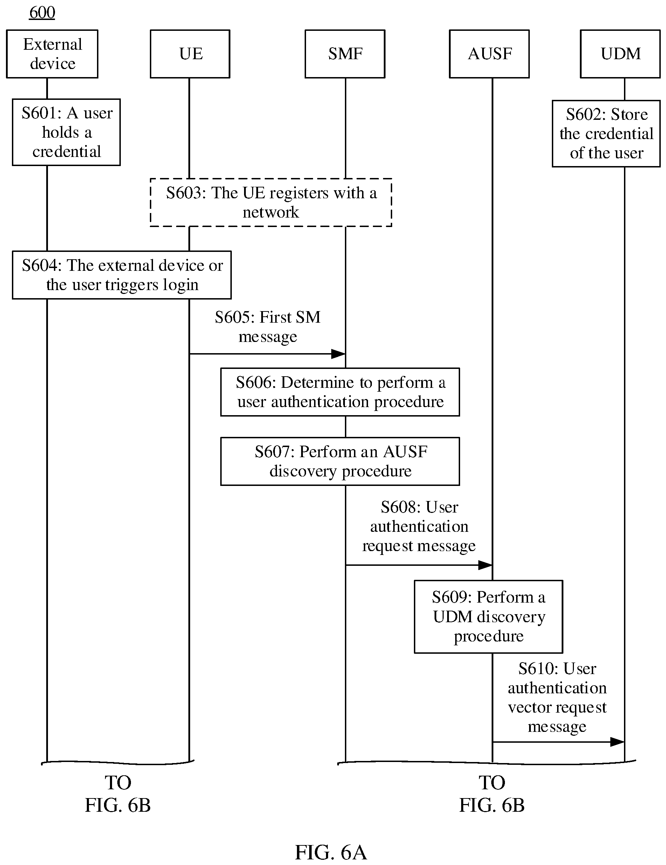

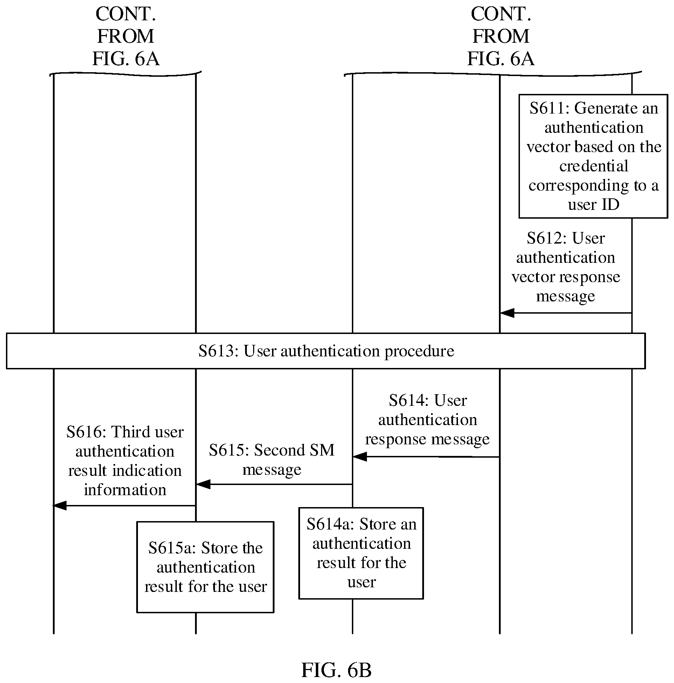

FIG. 6A and FIG. 6B are a schematic flowchart of a communication method 600 according to an embodiment of this application. As shown in FIG. 6A and FIG. 6B, the method procedure may be described by using an external device, user equipment UE, an AMF, an SMF, an AUSF, or a UDM as an execution entity, to resolve a problem that a session modification/establishment request sent by the UE does not include an EAP ID (namely, a DN-specific identity). The method includes the following plurality of steps. For a part that is not described in detail, refer to related descriptions in an existing protocol.

S601: A user holds a credential.

S602: The UDM stores the credential of the user.

S603: The UE successfully registers with a network.

S604: The external device or the user triggers login.

For specific implementations of steps S601 to S604, refer to the related descriptions of steps S501 to S504 in the foregoing method 500.

S605: The UE sends a first SM message (namely, an example of a first message) to the SMF (namely, an example of a first network element).

Correspondingly, the SMF receives the first SM message from the UE.

For example, the first SM message carries at least one of the following: a user ID (namely, an example of a first user identifier) or first indication information.

The user ID is under security protection, including integrity security protection and/or confidentiality security protection. For example, the user ID is under confidentiality protection.

Optionally, the first SM message is under security protection, including integrity security protection and/or confidentiality security protection. It should be noted that a protection manner in which the user ID is under security protection is not limited in this application, for example, may be security protection specifically for the user ID, or may be security protection for the first SM message carrying the user ID.

In an implementation, the first SM message is a PDU session establishment message. The PDU session establishment message carries at least one of the user ID and the first indication information.
(1) For a definition and a representation form of the user ID, refer to the related descriptions in the foregoing method 400 or 500.
(2) The first indication information indicates that the user logs in, for example, indicates that the user logs in to the user equipment, or that a message (or pop-up window) sent by the external device is received, where the message (or pop-up window) indicates that the user logs in to the external device.

Optionally, the first indication information may be a PDU session type. For example, the PDU session type indicates that the PDU session establishment message is used to request to establish a session for the user. Alternatively, the first indication information may be a user ID. Alternatively, the first indication information may be bit indication information. For example, when the bit indication information is set to 1, it indicates that the PDU session establishment message is not for the UE to establish the PDU session, or indicates that the PDU session establishment message is sent because the user logs in to the user equipment or the user equipment receives the message sent by the external device. Alternatively, the first indication information may be user ID authentication capability information (for example, capability of User-Id based authentication) of the UE. For example, when the UE has a user authentication capability, it indicates that the PDU session establishment message is used to request to establish a PDU session for the user or for the external device. In this case, the network may perform user authentication.

In another implementation, the first SM message is a user authentication request message, the user authentication request message may be considered as a new type of SM message, and the user authentication request message carries at least one of the UE identity information, the user ID, and the first indication information.
(1) For details of the user ID, refer to the foregoing descriptions.
(2) The first indication information indicates that the user logs in, for example, indicates that the user logs in to the user equipment, or indicates that the UE receives the message (or pop-up window) sent by the external device, where the message (or pop-up window) indicates that the user logs in to the external device.

Optionally, the first indication information may be an SM message type. For example, the SM message type indicates that the user authentication request message is used to request to authenticate the user. Alternatively, the first indication information may be a user ID. Alternatively, the first indication information may be user ID authentication capability information of the UE. For example, when the UE has a user authentication capability, it indicates that the user authentication request message is sent because the user logs in to the user equipment or the user equipment receives the message from the external device. In this case, the network may perform user authentication.

It should be noted that, when the first SM message carries the UE identity information, and the UE identity information is a 5G-GUTI, the user ID is under confidentiality protection, or when the UE identity information is a 5G-SUCI, the user ID may be placed in a confidentiality protection part. When the first SM message does not carry the UE identity information, the user ID may be under confidentiality protection by using an SM confidentiality protection key.

In still another implementation, the first SM message is an EAP-Response/Identity message, and the EAP-Response/Identity message carries the user ID. For a specific implementation, refer to the foregoing descriptions.

For example, before step S605 is performed, the method further includes: The SMF receives a registration request message from the UE, where the registration request message includes the UE identity information; and the AMF determines, based on the registration request message, to initiate a primary authentication procedure for the UE. For example, the SMF sends the EAP-request/Identity message to the UE. In other words, in this implementation, in the EAP-AKA authentication procedure performed for the UE, the UE uses the EAP-request/Identity message to carry the user ID under security protection, thereby reducing signaling overheads while ensuring network session security.

S606: The SMF determines to perform a user authentication procedure.

Specifically, the SMF determines, based on information carried in the first SM message or information associated with the first SM message, to perform the user authentication procedure.

In an implementation, the SMF determines, based on the user ID in the first SM message, to perform the user authentication procedure.

In another implementation, the SMF determines, based on the first indication information in the first SM message, to perform the user authentication procedure.

For example, the first indication information may be a session type (indicating that the first SM message may be a session establishment request message for the user), a specific field associated with the user or the user ID (user ID), or the user ID authentication capability information of the UE.

In still another possible implementation, the SMF determines, based on a name of the first message, for example, a user authentication request message (for example, Namf_UserAuthentication_Authenticate Request), to perform the user authentication procedure.

Optionally, the SMF may determine, based on local configuration information, to perform the user authentication procedure. For a specific implementation, refer to the related descriptions in the method 400.

It should be noted that an occasion on which the SMF determines that user authentication needs to be performed is not limited in this application.

For example, after receiving the first SM message, the SMF may determine that there may be one or more occasions on which user authentication needs to be performed. For example, after obtaining subscription data of the UE, the SMF may perform the action of determining user authentication. For example, if the SMF determines that the UE may be used for user login or may replace the external device to perform the user authentication procedure, the SMF then performs the action of determining user authentication. For another example, if the SMF determines that the SMF can support performing the user authentication procedure, the SMF then performs the action of determining user authentication, for example, if the subscription data of the UE indicates that the user ID can be bound to the UE, the SMF determines to perform user authentication.

Optionally, the occasion on which the SMF determines that user authentication needs to be performed may alternatively be: The SMF performs the determining action after obtaining subscription data of the user ID currently logged in to the UE. For example, if the SMF determines that the user ID on the UE can be used for login to the UE or the external device, the SMF performs the action of determining user authentication.

It should be noted that, when the first SM message is an EAP-Response/Identity message, the SMF first performs step S606, and then performs step S605.

S607: The SMF performs an AUSF discovery procedure.

For example, when the SMF determines to perform user authentication, the SMF performs the AUSF discovery procedure.

In an implementation, the SMF may discover, based on a local configuration, an AUSF that can perform user authentication.

In another implementation, the SMF determines, based on the user ID, an AUSF that can perform user authentication.

It should be noted that, if the first SM message is a PDU session establishment message, step S607 may be performed before the PDU session establishment message is sent or after the PDU session establishment message is sent. In other words, before step S607 is performed, the SMF may send a third SM message to the UE, where the third SM message is a PDU session establishment accept message. Alternatively, after step S615 is performed, the SMF may send a third SM message to the UE, where the third SM message is a PDU session establishment accept message. In other words, a sequence of the session establishment procedure and the user authentication procedure is not limited in this application. To be specific, the SMF may send the session establishment accept message to the UE before the user authentication procedure is completed, or after the user authentication procedure is completed.

For a specific implementation in which the SMF discovers (or determines) the AUSF, refer to the related descriptions in the method 500. Details are not described herein again.

S608: The SMF sends a user authentication request message to the AUSF.

Correspondingly, the AUSF receives the user authentication request message from the SMF.

For example, the user authentication request message carries the user ID, that is, the user authentication request message is used to request to authenticate the user.

Optionally, the user authentication request message may further carry second indication information, and the second indication information indicates to authenticate the user. The second indication information indicates the user authentication request message, or the second indication information may be a user authentication request message, or indicates that a current procedure is a user authentication procedure, specifically, indicates that the current user authentication request message is sent for the user authentication procedure.

Optionally, there is one or more implementations of the second indication information. For example, the second indication information is a message itself, namely, the user authentication request message. For another example, the second indication information is a new service-oriented operation. For example, the second indication information may be a user authentication type. For example, when the authentication type is user authentication, it indicates that the user authentication request message is a user authentication request, and is not for UE authentication. For another example, the second indication information may alternatively be bit indication information that represents an authentication type. For example, when the bit indication information is set to 1, it indicates that the user authentication request message is not for UE authentication, or indicates that the user authentication request message is for user authentication requested by the user or the external device. An implementation of the second indication information is not limited in embodiments.

Optionally, the user authentication request message may further carry an SN Name. The SN Name may be a PLMN ID of the SMF, or may be a fixed character string, for example, "user authentication". The SN Name is not specifically limited in embodiments.

S609: The AUSF performs a UDM discovery procedure.

For example, before the AUSF performs the UDM discovery procedure, the AUSF determines, based on the user authentication request message in step S508, to perform the user authentication procedure. For example, the AUSF determines, based on the second indication information, to perform the user authentication procedure, to trigger the UDM discovery procedure. For another example, the AUSF determines, based on the user ID carried in the user authentication request message, to perform the user authentication procedure, to trigger the UDM discovery procedure. For another example, the AUSF determines, based on the user ID and the second indication information that are carried in the user authentication request message, to perform the user authentication procedure, to trigger the UDM discovery procedure.

Optionally, the AUSF may determine, based on the user authentication request message in step S608 not carrying the SN Name, to perform the user authentication procedure. This is because the SN Name is a serving network name associated with the UE. If the user authentication request message does not carry the SN Name, the AUSF may understand that the user authentication request message is not for UE authentication, but is for user authentication.

S610: The AUSF sends a user authentication vector request message (for example, Nudm_UEAuthentication_Request) to the UDM.

Correspondingly, the UDM receives the user authentication vector request message, to request to obtain an authentication vector.

For example, the user authentication vector request message carries the user ID.

Optionally, the user authentication vector request message further carries third indication information. The third indication information indicates that the message is a user authentication vector request obtaining message, or indicates that the current procedure is a user authentication procedure, specifically, indicates that the current user authentication vector request message is sent for the user authentication procedure.

Optionally, there is one or more implementations of the third indication information. For example, the third indication information is a message itself. For another example, the third indication information is a new service-oriented operation. For example, the third indication information may be a user authentication type. For example, when the authentication type is user authentication, it indicates that the user authentication vector request message is used to request an authentication vector for the user, instead of being used to request an authentication vector for the UE, or indicates that the user authentication vector request message is sent for user authentication requested by the user or the external device. For another example, the third indication information may alternatively be bit indication information that represents an authentication type. For example, when the bit indication information is set to 1, it indicates that the user authentication vector request message is not used to request an authentication vector for the UE, or indicates that the authentication vector request message is for an authentication vector requested by the user or the external device. An implementation of the third indication information is not limited in embodiments.

Optionally, if the AUSF receives the SN Name in the user authentication request message in step S608, the SN Name is further carried in the following step S610.

S611: The UDM generates the authentication vector based on the credential corresponding to the user ID.

S612: The UDM sends a user authentication vector obtaining response message to the AUSF.

Correspondingly, the AUSF receives the user authentication vector response message.

The user authentication vector response message carries the user authentication vector.

S613: Perform the user authentication procedure.

For example, the AUSF performs the user authentication procedure with the user logging in to the external device or the UE. There is one or more implementations of the user authentication procedure, for example, the user authentication procedure may be an EAP or 5G-AKA authentication procedure. An implementation of the user authentication procedure is not specifically limited in embodiments.

For specific implementations of steps S611 to S613, refer to the related descriptions of steps S511 to S513 in the foregoing method 500.

S614: The AUSF sends a user authentication response message to the SMF.

Correspondingly, the SMF receives the user authentication response message from the AUSF.

For example, the user authentication response message carries first user authentication result indication information and the user ID.
(1) The first user authentication result indication information indicates that user authentication succeeds or user authentication fails, that is, the first user authentication result indication information indicates an authentication result for a first user.
(2) The first user authentication indication information may be bit indication information, enumerated indication information, or a message. For example, when the first user authentication indication information is bit indication information, a bit 0 indicates that authentication fails, and a bit 1 indicates that authentication succeeds. For another example, when the first user authentication indication information is enumerated indication information, a character string "Failure" indicates that authentication fails, and a character string "success" indicates that authentication succeeds. For another example, when the first user authentication indication information is a message, EAP-Failure indicates that authentication fails, and EAP-Success indicates that authentication succeeds. After determining a user authentication result, the AUSF sends the user authentication response message to the SMF.

Optionally, when the first user authentication result indication information indicates that authentication succeeds, the SMF locally creates context information of the user ID. Optionally, the SMF stores at least one of authentication success time and a correspondence between the user ID and the SUPI, or the SMF stores a correspondence between the user ID, and the SUPI and/or authentication success time.

S614a: The SMF stores the authentication result for the user.

S615: The SMF sends a second SM message to the UE.

Correspondingly, the UE receives the second SM message from the SMF.

The second SM message carries second user authentication result indication information, and the second user authentication result indication information indicates a user authentication result, for example, user authentication succeeds or user authentication fails.

In an implementation, the second user authentication result indication information is the same as the first user authentication result indication information.

For example, when the second user authentication result indication information indicates that user authentication succeeds, the UE allows the user or the external device to continue to use the UE, to provide a service for the UE. When the second user authentication result indication information indicates that user authentication fails, the UE allows the user or the external device to continue to attempt authentication again, or brings the user offline from the UE and releases the connection between the UE and the external device. When the UE allows the user or the external device to continue to attempt authentication again, the UE resends the first SM message to the SMF. Optionally, when the second user authentication result indication information indicates that user authentication succeeds, the UE locally creates the context information of the user ID. Optionally, the UE stores user ID authentication success time.

S615a: The UE stores the authentication result for the user.

Optionally, when the user authentication result indicated by the second SM message indicates that user authentication succeeds, the UE may associate and store together, with the user ID, at least one of authentication success and the authentication success time, so that when the user subsequently logs in to the UE or the external device again, the UE may determine, based on the locally stored user authentication result (that is, user authentication succeeds) associated with the user ID, not to trigger the network to authenticate the first user, thereby providing a service for the first user, reducing signaling overheads, and ensuring user service experience.

S616: The UE sends third user authentication result indication information to the user or the external device.

Correspondingly, the external device receives the third user authentication result indication information from the UE.

The third user authentication result indication information indicates a user authentication result, for example, user authentication succeeds or user authentication fails.

In an implementation, the third user authentication result indication information, the second user authentication result indication information, and the first user authentication result indication information are the same.

For example, when the UE sends the third user authentication result indication information to the external device, one or more implementations are included. For example, the UE may display notification information, and the notification information is displayed as "Login succeeds". When the UE sends the third user authentication result indication information to the external device, the third user authentication result indication information is transmitted in a manner of adapting to a protocol between the UE and the external device.

It should be noted that, in this embodiment, the foregoing execution entity AUSF may be replaced with an NSSAAF, an AAA-Proxy, or an NSSAAF and an AAA-Proxy, and the UDM may be replaced with an AAA server. When the UDM is replaced with the AAA server and the AUSF is replaced with the AAA-P, the AAA-P is an optional network element. If the AAA-P is not required, related adjustment in this embodiment is as follows: Step S608 and step S609 are not required. In step S610, sending is performed by the SMF, and in step S613, sending is performed to the SMF. A termination point of step S613 is the AAA server. A sender in step S614 is the AAA server.

According to the foregoing solutions, after perceiving that the user logs in to the user equipment or that the user equipment is connected to the external device, the user equipment UE actively sends the first message to the first network element SMF for notification of user information (for example, the user ID), to request to trigger the user authentication procedure, thereby ensuring network security. This implementation enables bidirectional authentication between the UE and the serving network, ensuring that a core network side can know that the user ID is a legitimate ID and provide network services accordingly. In the conventional technology, the network side and the UE can only implement bidirectional authentication for the SUCI, and can only determine legitimacy of the SUPI. Therefore, in a user ID scenario, legitimacy of a user ID that is used to log in to the UE cannot be ensured. After the user logs in to the user equipment or the external device by using the user ID, a new SM message (namely, an example of the first message) is sent to implement user authentication.

Optionally, in embodiments of this application, authentication on the user ID definitely occurs on the basis that authentication on the SUPI succeeds. The authentication result for the user ID is independent of the authentication result for the SUPI. In other words, the authentication result for the user ID does not affect the authentication result for the SUPI. That is, the authentication result for the first user does not affect the authentication result for the user equipment, and in other words, does not affect use of the UE corresponding to the SUPI in the 5GC. Specifically, even if authentication on the user fails, and consequently the user cannot access the network through the user equipment, other users are not affected in accessing the network through the user equipment (that is, a failure in authenticating the first user does not change a result of previous successful authentication on the user equipment).

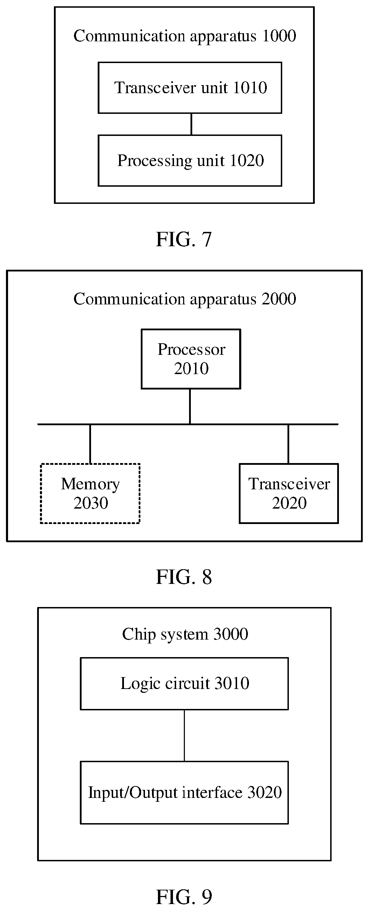

The foregoing describes in detail embodiments on a communication method side in this application with reference to FIG. 1 to FIG. 6B. The following describes in detail embodiments on a communication apparatus side in this application with reference to FIG. 7 to FIG. 9. It should be understood that descriptions of the apparatus embodiments correspond to the descriptions of the method embodiments. Therefore, for a part that is not described in detail, refer to the foregoing method embodiments.

FIG. 7 is a diagram of a structure of a communication apparatus 1000 according to an embodiment of this application. As shown in FIG. 7, the apparatus 1000 may include a transceiver unit 1010 and a processing unit 1020. The transceiver unit 1010 may communicate with the outside. The processing unit 1020 is configured to process data. The transceiver unit 1010 may also be referred to as a communication interface or a transceiver unit.

In a possible design, the apparatus 1000 may implement steps or procedures performed by the first network element in the foregoing method embodiments. The processing unit 1020 is configured to perform a processing-related operation of the first network element in the foregoing method embodiments, and the transceiver unit 1010 is configured to perform a receiving/sending-related operation of the first network element in the foregoing method embodiments.

For example, the transceiver unit 1010 is configured to receive a first message from user equipment, where the first message includes a security-protected first user identifier of a first user using the user equipment. The processing unit 1020 is configured to initiate an authentication procedure for the first user based on the first message. The transceiver unit 1010 is further configured to send a second message to the user equipment, where the second message indicates an authentication result for the first user.

For example, before receiving the first message from the user equipment, the transceiver unit 1010 is further configured to receive a registration request message from the user equipment, where the registration request message includes an identifier of the user equipment. The processing unit 1020 is further configured to determine, based on the registration request message, to initiate a primary authentication procedure for the user equipment. After the primary authentication procedure for the user equipment, the transceiver unit 1010 is further configured to send a non-access stratum security mode command NAS SMC message to the user equipment, where the NAS SMC message is used to activate a NAS security context. The transceiver unit 1010 is further configured to receive a NAS security mode command complete NAS SMP message from the user equipment.

For example, the first message is a NAS SMP message. Before receiving the first message from the user equipment, the method further includes: The transceiver unit 1010 is further configured to receive a registration request message from the user equipment, where the registration request message includes an identifier of the user equipment. The processing unit 1020 is further configured to determine, based on the registration request message, to initiate a primary authentication procedure for the user equipment. After the primary authentication procedure for the user equipment, the transceiver unit 1010 is further configured to send a NAS SMC message to the user equipment, where the NAS SMC message is used to activate a NAS security context.

For example, before receiving the first message from the user equipment, the method further includes: The transceiver unit 1010 is further configured to receive a registration request message from the user equipment, where the registration request message includes an identifier of the user equipment and a second user identifier of a second user. The processing unit 1020 is further configured to determine, based on the registration request message, to initiate a primary authentication procedure for the user equipment. After primary authentication on the user equipment succeeds, the processing unit 1020 is further configured to initiate an authentication procedure for the second user.

For example, that the processing unit 1020 is configured to initiate the authentication procedure for the first user based on the first message includes: The processing unit 1020 is further configured to initiate authentication on the first user based on first indication information associated with the first message, where the first indication information is represented by one or more of a name of the first message, a first user identifier, or a specified information element in the first message.

For example, that the processing unit 1020 is configured to initiate an authentication procedure for the first user includes: The processing unit 1020 is further configured to determine a first authentication function; the transceiver unit 1010 is further configured to send a user authentication request message to the first authentication function, where the user authentication request message includes a first user identifier, and the user authentication request message is used to request to authenticate the first user; and the transceiver unit 1010 is further configured to receive a user authentication response message from the first authentication function, where the user authentication response message indicates the authentication result for the first user.

For example, that the processing unit 1020 is further configured to determine the first authentication function includes: The processing unit 1020 is further configured to determine the first authentication function based on local configuration information; and/or the processing unit 1020 is further configured to determine the first authentication function based on the first user identifier.

For example, the user authentication request message further includes second indication information, and the second indication information indicates that to authenticate the first user.

For example, the user authentication response message includes the authentication result for the first user and/or first user authentication result indication information, the first user authentication result indication information indicates the authentication result for the first user, and the authentication result for the first user indicates that the first user is successfully authenticated or fails to be authenticated.

For example, the second message includes the authentication result for the first user and/or second user authentication result indication information, the second user authentication result indication information indicates the authentication result for the first user, and the authentication result for the first user indicates that the first user is successfully authenticated or fails to be authenticated.

For example, when the authentication result for the first user indicates that the first user is successfully authenticated, the processing unit 1020 is further configured to store an association relationship between the first user identifier and at least one of the authentication result for the first user, the identifier of the user equipment, and authentication success time.

For example, the first user identifier includes a first information part and a second information part, the first information part identifies the first user, the second information part is used to determine routing information of a first storage function, the first storage function is used to store a credential of the first user, and the credential is used for identification and authentication of the first user.

For example, when the first network element is a mobility management network element, the first message is a first NAS message, and the second message is a second NAS message; or when the first network element is a session management network element, the first message is a first session management SM message, and the second message is a second SM message.

For example, the first NAS message is a registration request message, or the first NAS message is a user authentication request message, or the first NAS message is a NAS SMP message.

For example, when the first NAS message is a registration request message, the method further includes: After the authentication procedure for the first user, the transceiver unit 1010 is further configured to send a registration complete message to the user equipment; or before the authentication procedure for the first user, the transceiver unit 1010 is further configured to send a registration complete message to the user equipment.

For example, the first SM message is a protocol data unit PDU session establishment request message, or the first SM message is a user authentication request message, or the first SM message is an extensible authentication protocol response EAP-Response message.

In another possible design, the apparatus 1000 may implement the steps or procedures performed by the first authentication function in the foregoing method embodiments. The transceiver unit 1010 is configured to perform the receiving/sending-related operations of the first authentication function in the foregoing method embodiments. The processing unit 1020 is configured to perform the processing-related operations of the first authentication function in the foregoing method embodiments.

In still another possible design, the apparatus 1000 may implement steps or procedures performed by the user equipment in the foregoing method embodiments. The processing unit 1020 is configured to perform an operation related to processing of the user equipment in the foregoing method embodiments, and the transceiver unit 1010 is configured to perform an operation related to sending and receiving of the user equipment in the foregoing method embodiments.

For example, the transceiver unit 1010 is configured to send a first message to a first network element, where the first message includes a security-protected first user identifier of a first user using the user equipment. The transceiver unit 1010 is further configured to receive a second message from the first network element, where the second message indicates an authentication result for the first user. The transceiver unit 1010 is further configured to send the authentication result for the first user to the first user.

For example, the method further includes: When the authentication result for the first user indicates that the first user is successfully authenticated, the processing unit 1020 is configured to store an association relationship between the first user identifier and at least one of the authentication result for the first user and authentication success time.

For example, before the transceiver unit 1010 is further configured to send the first message to the first network element, the method further includes: When the first user logs in to the user equipment and/or an external device by using the first user identifier, the processing unit 1020 is further configured to determine that the authentication result for the first user is not locally stored, where the external device is in a communication connection with the user equipment.

For example, that the transceiver unit 1010 is configured to send the first message to the first network element includes: When the first user logs in to the user equipment and/or the external device by using the first user identifier, the transceiver unit 1010 is further configured to send the first message to the first network element.

For example, before the transceiver unit 1010 is configured to send the first message to the first network element, the method further includes: The transceiver unit 1010 is further configured to send a registration request message to the first network element, where the registration request message includes an identifier of the user equipment. The transceiver unit 1010 is further configured to receive a non-access stratum security mode command NAS SMC message from the first network element after a primary authentication procedure for the user equipment, where the NAS SMC message is used to activate a NAS security context. The transceiver unit 1010 is further configured to send a NAS security mode command complete NAS SMP message to the first network element.

For example, the first message is a NAS SMP message. Before the transceiver unit 1010 is configured to send the first message to the first network element, the method further includes: The transceiver unit 1010 is further configured to send a registration request message to the first network element, where the registration request message includes an identifier of the user equipment. The transceiver unit 1010 is further configured to receive a NAS SMC message from the first network element after a primary authentication procedure for the user equipment, where the NAS SMC message is used to activate a NAS security context.

For example, before the transceiver unit 1010 is configured to send the first message to the first network element, the method further includes: The transceiver unit 1010 is further configured to send a registration request message to the first network element, where the registration request message includes an identifier of the user equipment and a second user identifier of a second user.

For example, the first user identifier includes a first information part and a second information part, the first information part identifies the first user, the second information part is used to determine routing information of a first storage function, the first storage function is used to store a credential of the first user, and the credential is used for identification and authentication of the first user.

For example, before the transceiver unit 1010 is configured to send the first message to the first network element, the method further includes: The processing unit 1020 is further configured to obtain the first user identifier, which specifically includes: The transceiver unit 1010 is further configured to receive the first user identifier from the external device; and/or the processing unit 1020 is further configured to obtain the user identifier based on logging in to the user equipment by the first user by using the first user identifier.

For example, the second message includes the authentication result for the first user and/or second user authentication result indication information, the second user authentication result indication information indicates the authentication result for the first user, and the authentication result for the first user indicates that the first user is successfully authenticated or fails to be authenticated.

For example, that the transceiver unit 1010 is further configured to send the authentication result for the first user to the first user includes: The transceiver unit 1010 is further configured to send third user authentication result indication information to the first user, where the third user authentication result indication information indicates the authentication result for the first user, and the authentication result for the first user indicates that the first user is successfully authenticated or fails to be authenticated.

For example, the method further includes: when the authentication result for the first user indicates that the first user is successfully authenticated, the processing unit 1020 is further configured to provide a service for the first user; or when the authentication result for the first user indicates that the first user fails to be authenticated, the processing unit 1020 is further configured to refuse to provide a service for the first user.

For example, when the first network element is a mobility management network element, the first message is a first NAS message, and the second message is a second NAS message; or when the first network element is a session management network element, the first message is a first session management SM message, and the second message is a second SM message.

For example, the first NAS message is a registration request message, or the first NAS message is a user authentication request message, or the first NAS message is a NAS SMP message.

For example, when the first NAS message is a registration request message, the method further includes: After an authentication procedure for the first user, the transceiver unit 1010 is further configured to receive a registration complete message from the first network element; or before an authentication procedure for the first user, the transceiver unit 1010 is further configured to receive a registration complete message from the first network element.

For example, the first SM message is a protocol data unit PDU session establishment request message, or the first SM message is a user authentication request message, or the first SM message is an extensible authentication protocol response EAP-Response message.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 1000 may be specifically a transmit end in the foregoing embodiments, and may be configured to perform procedures and/or steps corresponding to the transmit end in the foregoing method embodiments. Alternatively, the apparatus 2000 may be specifically a receive end in the foregoing embodiments, and may be configured to perform procedures and/or steps corresponding to the receive end in the foregoing method embodiments. To avoid repetition, details are not described herein again.

The apparatus 1000 in the foregoing solutions has a function of implementing corresponding steps performed by the transmit end in the foregoing methods, or the apparatus 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving and sending operations and related processing operations in the foregoing method embodiments.

In addition, the transceiver unit may alternatively be a transceiver circuit (for example, may include a receiving circuit and a sending circuit), and the processing unit may be a processing circuit. In this embodiment of this application, the apparatus in FIG. 7 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 8 is a schematic diagram of a structure of a communication apparatus 2000 according to an embodiment of this application. As shown in FIG. 8, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through the internal connection path. The memory 2030 is configured to store instructions, and the processor 2010 may execute the instructions stored in the memory 2030.

In a possible implementation, the apparatus 2000 is configured to implement procedures and steps corresponding to the first network element in the foregoing method embodiments.

In another possible implementation, the apparatus 2000 is configured to implement procedures and steps corresponding to the user equipment in the foregoing method embodiments.

In still another possible implementation, the apparatus 2000 is configured to implement procedures and steps corresponding to the first authentication function in the foregoing method embodiments.

It should be understood that the apparatus 2000 may be specifically the transmit end or the receive end in the foregoing embodiments, or may be a chip or a chip system. Correspondingly, the transceiver 2020 may be a transceiver circuit of the chip. This is not limited herein. Specifically, the apparatus 2000 may be configured to perform the steps and/or the processes corresponding to the transmit end or the receive end in the foregoing method embodiments.

Optionally, the memory 2030 may include a read-only memory and a random access memory, and provide instructions and data to the processor. A part of the memory may further include a non-volatile random access memory. For example, the memory may further store information about a device type. The processor 2010 may be configured to execute the instructions stored in the memory. When the processor 2010 executes the instructions stored in the memory, the processor 2010 is configured to perform the steps and/or the processes in the method embodiments corresponding to the transmit end or the receive end.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor.

It may be understood that the memory in this embodiment of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, RAMs in many forms may be used, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory of the systems and methods described in this specification includes but is not limited to these and any memory of another proper type.

FIG. 9 is a diagram of a structure of a chip system 3000 according to an embodiment of this application. As shown in FIG. 9, the chip system 3000 (or may be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, to enable the chip system 3000 to implement the methods and the functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by the user equipment in the foregoing method embodiments.

In a solution, the chip system 3000 is configured to implement operations performed by the first network element in the foregoing method embodiments.

In a solution, the chip system 3000 is configured to implement operations performed by the first authentication function in the foregoing method embodiments.

An embodiment of this application further provides a computer-readable storage medium. The computer-readable storage medium stores computer instructions used to implement the method performed by at least one of the user equipment, the first network element, or the first authentication function in the foregoing method embodiments.

An embodiment of this application further provides a computer program product, including computer program code or instructions. When the computer program code or the instructions are run on a computer, the computer is caused to implement the method performed by at least one of the user equipment, the first network element, and the first authentication function in the foregoing method embodiments.

An embodiment of this application further provides a communication system, including the foregoing first network element and/or first authentication function.

Optionally, the communication system further includes the foregoing user equipment.

For explanations and beneficial effects of related content of any one of the apparatuses provided above, refer to the corresponding method embodiments provided above. Details are not described herein again.

For ease of understanding the foregoing embodiments provided in this application, the following descriptions are provided.
(1) In this application, unless otherwise stated or if there is a logic conflict, terms and/or descriptions in different embodiments are consistent and may be mutually referenced, and technical features in different embodiments may be combined into a new embodiment based on an internal logical relationship thereof.
(2) In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof means any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.
(3) In this application, "first", "second", and various numbers (for example, #1 and #2) are merely used for distinguishing for ease of description, and are not intended to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.
(4) In this application, descriptions such as "when...", "in a case of...", and "if" all mean that a device performs corresponding processing in an objective case and do not limit time, and the device is not required to perform a determining action during implementation. This does not mean that there is another limitation.
(5) In this application, "indicating" may include directly indicating and indirectly indicating. When a piece of indication information indicates A, the indication information may directly indicate A or indirectly indicate A, but this does not mean that the indication information necessarily carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

(6) In this application, a "protocol" may be a standard protocol in the communication field, for example, may include a 5G protocol, an NR protocol, and a related protocol used in a future communication system. This is not limited in this application. "Predefinition" may include advance definition, for example, definition in a protocol. "Preconfiguration" may be implemented by pre-storing corresponding code or a corresponding table in a device, or may be implemented in another manner of indicating related information. A specific implementation thereof is not limited in this application.

(7) In this application, "communication" may also be described as "data transmission", "information transmission", "data processing", or the like. "Transmission" includes "sending" and "receiving".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, or each unit may exist physically alone, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for instructing a computer device to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A communication method, comprising:
receiving a first message from user equipment, wherein the first message comprises a security-protected first user identifier of a first user using the user equipment;
initiating an authentication procedure for the first user based on the first message; and
sending a second message to the user equipment, wherein the second message indicates an authentication result for the first user.

2. The method according to claim 1, wherein before receiving the first message from the user equipment, the method further comprises:
receiving a registration request message from the user equipment, wherein the registration request message comprises an identifier of the user equipment;
determining, based on the registration request message, to initiate a primary authentication procedure for the user equipment;
sending a non-access stratum security mode command NAS SMC message to the user equipment after the primary authentication procedure for the user equipment, wherein the NAS SMC message is used to activate a NAS security context; and
receiving a NAS security mode command complete NAS SMP message from the user equipment.

3. The method according to claim 1, wherein the first message is a NAS SMP message; and before receiving the first message from the user equipment, the method further comprises:
receiving a registration request message from the user equipment, wherein the registration request message comprises an identifier of the user equipment;
determining, based on the registration request message, to initiate a primary authentication procedure for the user equipment; and
sending a NAS SMC message to the user equipment after the primary authentication procedure for the user equipment, wherein the NAS SMC message is used to activate a NAS security context.

4. The method according to claim 1, wherein before receiving the first message from the user equipment, the method further comprises:
receiving a registration request message from the user equipment, wherein the registration request message comprises an identifier of the user equipment and a second user identifier of a second user;
determining, based on the registration request message, to initiate a primary authentication procedure for the user equipment; and
initiating an authentication procedure for the second user after primary authentication on the user equipment succeeds.

5. The method according to any one of claims 1 to 4, wherein initiating the authentication procedure for the first user based on the first message comprises:
initiating authentication on the first user based on first indication information associated with the first message, wherein
the first indication information is represented by one or more of a name of the first message, the first user identifier, or a specified information element in the first message.

6. The method according to any one of claims 1 to 5, wherein initiating the authentication procedure for the first user comprises:
determining a first authentication function;
sending a user authentication request message to the first authentication function, wherein the user authentication request message comprises the first user identifier, and the user authentication request message is used to request to authenticate the first user; and
receiving a user authentication response message from the first authentication function, wherein the user authentication response message indicates the authentication result for the first user.

7. The method according to claim 6, wherein determining the first authentication function comprises:
determining the first authentication function based on local configuration information; and/or
determining the first authentication function based on the first user identifier.

8. The method according to claim 6 or 7, wherein the user authentication request message further comprises second indication information, and the second indication information indicates to authenticate the first user.

9. The method according to any one of claims 6 to 8, wherein the user authentication response message comprises the authentication result for the first user and/or first user authentication result indication information, the first user authentication result indication information indicates the authentication result for the first user, and the authentication result for the first user indicates that the first user is successfully authenticated or fails to be authenticated.

10. The method according to any one of claims 1 to 9, wherein the second message comprises the authentication result for the first user and/or second user authentication result indication information, the second user authentication result indication information indicates the authentication result for the first user, and the authentication result for the first user indicates that the first user is successfully authenticated or fails to be authenticated.

11. The method according to any one of claims 1 to 10, wherein the method further comprises:
when the authentication result for the first user indicates that the first user is successfully authenticated, storing an association relationship between the first user identifier and at least one of the authentication result for the first user, the identifier of the user equipment, or authentication success time.

12. The method according to any one of claims 1 to 11, wherein the first user identifier comprises a first information part and a second information part, the first information part identifies the first user, the second information part is used to determine routing information of a first storage function, the first storage function is used to store a credential of the first user, and the credential is used for identification and authentication of the first user.

13. The method according to any one of claims 1 to 12, wherein the method is applied to a first network element; and
when the first network element is a mobility management network element, the first message is a first NAS message, and the second message is a second NAS message; or
when the first network element is a session management network element, the first message is a first session management SM message, and the second message is a second SM message.

14. The method according to claim 13, wherein the first NAS message is a registration request message, or the first NAS message is a user authentication request message, or the first NAS message is a NAS SMP message.

15. The method according to claim 14, wherein when the first NAS message is a registration request message, the method further comprises:
sending a registration complete message to the user equipment after the authentication procedure for the first user; or
sending a registration complete message to the user equipment before the authentication procedure for the first user.

16. The method according to any one of claims 13 to 15, wherein the first SM message is a protocol data unit PDU session establishment request message, or the first SM message is a user authentication request message, or the first SM message is an extensible authentication protocol response EAP-Response message.

17. A communication method, comprising:
sending a first message to a first network element, wherein the first message comprises a security-protected first user identifier of a first user using user equipment;
receiving a second message from the first network element, wherein the second message indicates an authentication result for the first user; and
sending the authentication result for the first user to the first user.

18. The method according to claim 17, wherein the method further comprises:
when the authentication result for the first user indicates that the first user is successfully authenticated, storing an association relationship between the first user identifier and at least one of the authentication result for the first user or authentication success time.

19. The method according to claim 17 or 18, wherein before sending the first message to the first network element, the method further comprises:
when the first user logs in to the user equipment and/or an external device by using the first user identifier, determining that the authentication result for the first user is not locally stored, wherein the external device is in a communication connection with the user equipment.

20. The method according to claim 17, wherein sending the first message to the first network element comprises:
sending the first message to the first network element when the first user logs in to the user equipment and/or an external device by using the first user identifier.

21. The method according to any one of claims 17 to 20, wherein before sending the first message to the first network element, the method further comprises:
sending a registration request message to the first network element, wherein the registration request message comprises an identifier of the user equipment;
receiving a non-access stratum security mode command NAS SMC message from the first network element after a primary authentication procedure for the user equipment, wherein the NAS SMC message is used to activate a NAS security context; and
sending a NAS security mode command complete NAS SMP message to the first network element.

22. The method according to any one of claims 17 to 20, wherein the first message is a NAS SMP message; and
before sending the first message to the first network element, the method further comprises:
sending a registration request message to the first network element, wherein the registration request message comprises an identifier of the user equipment; and
receiving a NAS SMC message from the first network element after a primary authentication procedure for the user equipment, wherein the NAS SMC message is used to activate a NAS security context.

23. The method according to any one of claims 17 to 20, wherein before sending the first message to the first network element, the method further comprises:
sending a registration request message to the first network element, wherein the registration request message comprises an identifier of the user equipment and a second user identifier of a second user.

24. The method according to any one of claims 17 to 23, wherein the first user identifier comprises a first information part and a second information part, the first information part identifies the first user, the second information part is used to determine routing information of a first storage function, the first storage function is used to store a credential of the first user, and the credential is used for identification and authentication of the first user.

25. The method according to any one of claims 17 to 24, wherein before sending the first message to the first network element, the method further comprises:
obtaining the first user identifier, which specifically comprises:
receiving the first user identifier from the external device; and/or
obtaining the first user identifier based on logging in to the user equipment by the first user by using the first user identifier.

26. The method according to any one of claims 17 to 25, wherein the second message comprises the authentication result for the first user and/or second user authentication result indication information, the second user authentication result indication information indicates the authentication result for the first user, and the authentication result for the first user indicates that the first user is successfully authenticated or fails to be authenticated.

27. The method according to any one of claims 17 to 24, wherein sending the authentication result for the first user to the first user comprises:
sending third user authentication result indication information to the first user, wherein the third user authentication result indication information indicates the authentication result for the first user, and the authentication result for the first user indicates that the first user is successfully authenticated or fails to be authenticated.

28. The method according to any one of claims 17 to 27, wherein the method further comprises:
providing a service for the first user when the authentication result for the first user indicates that the first user is successfully authenticated; or
refusing to provide a service for the first user when the authentication result for the first user indicates that the first user fails to be authenticated.

29. A communication method, comprising:
receiving a first message from user equipment, wherein the first message comprises a user identifier, and the first message is used to trigger a network to authenticate the user identifier;
determining to authenticate the user identifier, and obtaining a user authentication result; and
sending a second message to the user equipment, wherein the second message indicates the user authentication result.

30. The method according to claim 29, wherein determining to authenticate the user identifier comprises:
determining, based on a name of the first message, to authenticate the user identifier.

31. The method according to claim 29 or 30, wherein determining to authenticate the user identifier comprises:
determining, based on the user identifier carried in the first message, to authenticate the user identifier.

32. The method according to any one of claims 29 to 31, wherein determining to authenticate the user identifier comprises:
determining, based on a registration type carried in the first message, to authenticate the user identifier.

33. The method according to any one of claims 29 to 32, wherein determining to authenticate the user identifier comprises:
determining, based on local configuration information, to authenticate the user identifier.

34. The method according to any one of claims 29 to 33, wherein the user identifier is under integrity security protection and/or confidentiality security protection.

35. The method according to any one of claims 29 to 34, wherein the method further comprises:
storing an association relationship between the user authentication result and the user identifier.

36. The method according to any one of claims 29 to 35, wherein the first message is a non-access stratum NAS message or a session management SM message.

37. A communication method, comprising:
sending a first message to a first network element, wherein the first message comprises a user identifier, and the first message is used to trigger a network to authenticate the user identifier; and receiving a second message from the first network element, wherein the second message indicates a user authentication result.

38. The method according to claim 37, wherein sending the first message to the first network element comprises:
sending the first message to the first network element when determining that a user logs in to user equipment by using the user identifier.

39. The method according to claim 38, wherein determining that the user logs in to the user equipment by using the user identifier comprises:
determining that the user logs in to an external device by using the user identifier, wherein the external device establishes a connection with the user equipment.

40. The method according to any one of claims 37 to 39, wherein the user identifier is integrity security protected and/or confidentiality security protected.

41. The method according to any one of claims 37 to 40, wherein the method further comprises:
storing an association relationship between the user authentication result and the user identifier.

42. The method according to any one of claims 37 to 41, wherein the first message is a non-access stratum NAS message or a session management SM message.

43. A communication apparatus, comprising one or more functional modules, wherein the one or more functional modules are configured to perform the method according to any one of claims 1 to 16 and claims 29 to 36, or the one or more functional modules are configured to perform the method according to any one of claims 17 to 28 and claims 37 to 42.

44. A communication apparatus, comprising at least one processor, wherein the at least one processor is configured to execute a computer program or instructions, so that the method according to any one of claims 1 to 16 and claims 29 to 36 is performed, or the method according to any one of claims 17 to 28 and claims 37 to 42 is performed.

45. The communication apparatus according to claim 44, wherein
the communication apparatus further comprises a memory, and the memory is configured to store the computer program or the instructions; and/or
the communication apparatus further comprises a communication interface, wherein the communication interface is coupled to the at least one processor, and the communication interface is configured to input and/or output information.

46. The communication apparatus according to claim 44 or 45, wherein the communication apparatus is a chip or a chip system.

47. A computer-readable storage medium, wherein the computer-readable storage medium stores a computer program, and when the computer program runs on a computer, the computer is caused to perform the method according to any one of claims 1 to 16 and claims 29 to 36, or the computer is caused to perform the method according to any one of claims 17 to 28 and claims 37 to 42.

48. A computer program product, comprising instructions, wherein when the instructions are run on a computer, the method according to any one of claims 1 to 16 and claims 29 to 36 is implemented, or the method according to any one of claims 17 to 28 and claims 37 to 42 is implemented.

49. A communication system, comprising a first network element, wherein the first network element is configured to perform the method according to any one of claims 1 to 16 and claims 29 to 36.

50. The communication system according to claim 49, wherein the communication system further comprises user equipment, and the user equipment is configured to perform the method according to any one of claims 17 to 28 and claims 37 to 42.
